(19) Europäisches Patentamt
European Patent Office
Office européen des brevets

(11) **EP 3 178 856 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(51) Int Cl.:
*C09J 133/02* (2006.01)    *C09J 4/06* (2006.01)
*C08F 220/18* (2006.01)    *C08K 5/544* (2006.01)

(21) Anmeldenummer: **16201618.2**

(22) Anmeldetag: **01.12.2016**

(54) **ZUSAMMENSETZUNG ZUR HERSTELLUNG VON HAFTKLEBEMASSEN**

COMPOSITION FOR THE PRODUCTION OF PRESSURE-SENSITIVE ADHESIVES

COMPOSITION POUR LA FABRICATION DE MASSES ADHÉSIVES DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015 DE 102015224734**

(43) Veröffentlichungstag der Anmeldung:
**14.06.2017 Patentblatt 2017/24**

(73) Patentinhaber: **tesa SE**
**22848 Norderstedt (DE)**

(72) Erfinder:
• **Bamberg, Sarah**
**22529 Hamburg (DE)**
• **Befuß, Julia**
**22457 Hamburg (DE)**
• **Prenzel, Alexander**
**22529 Hamburg (DE)**
• **Pütz, Benjamin**
**22527 Hamburg (DE)**

(56) Entgegenhaltungen:
EP-A1- 1 754 754    CN-A- 102 585 111
US-A- 4 818 790    US-A1- 2012 328 873

**Beschreibung**

Die Erfindung betrifft das technische Gebiet der Haftklebmassen, speziell der Polyacrylatbasierten Haftklebmassen. Konkret wird ein Vernetzer-Beschleuniger-System für derartige Massen vorgeschlagen, das als wesentliche Bestandteile ein Organosilan mit einer cyclischen Etherfunktion und mindestens zwei mit Wasser abspaltbaren Gruppen sowie eine die Vernetzungsreaktion beschleunigende Substanz enthält.

Für hochwertige Klebe-, Haftklebe- oder Heißsiegelmassen in industriellen Anwendungen werden häufig Polyacrylate eingesetzt, da diese sich für die wachsenden Anforderungen in diesen Anwendungsbereichen als gut geeignet herausgestellt haben. So müssen Haftklebmassen eine gute Anfassklebrigkeit ("Tack") aufweisen, aber auch hohen Anforderungen an die Scherfestigkeit insbesondere bei hohen Temperaturen sowie bei hoher Luftfeuchtigkeit bzw. in Kontakt mit Feuchtigkeit gerecht werden. Gleichzeitig müssen die Massen auch gut verarbeitbar, insbesondere zur Beschichtung auf Trägermaterialien geeignet, sein. Dies wird beispielsweise durch die Verwendung von Polyacrylaten mit hohem Molekulargewicht und eine effiziente Vernetzung erreicht. Zudem lassen sich Polyacrylate transparent und witterungsstabil herstellen.

Bei der Beschichtung von Polyacrylatmassen aus Lösung oder als Dispersion ist die thermische Vernetzung seit langem Stand der Technik. In der Regel setzt man den thermischen Vernetzer - üblicherweise ein multifunktionelles Isocyanat, ein Metall-Chelat oder ein multifunktionelles Epoxid - zur Lösung eines entsprechend mit funktionellen Gruppen ausgestatteten Poly(meth)acrylats zu, beschichtet flächig mit Hilfe eines Rakels oder Streichbalkens auf ein Substrat und trocknet anschließend. Dadurch werden Verdünnungsmittel - also organische Lösemittel oder Wasser im Falle der Dispersionen - verdampft und das Polyacrylat entsprechend vernetzt. Die Vernetzung ist sehr wichtig für die Beschichtungen, denn dadurch erhalten sie eine ausreichende Kohäsion und Wärmescherfestigkeit. Ohne Vernetzung wären die Beschichtungen zu weich und würden schon bei geringer Belastung zerfließen. Wesentlich für ein gutes Beschichtungsergebnis ist die Beachtung der Topfzeit. Dabei handelt es sich um die Zeit, in der das System in verarbeitungsfähigem Zustand vorliegt. Die Topfzeit kann je nach Vernetzungssystem deutlich unterschiedlich sein. Ist sie zu kurz, dann hat der Vernetzer schon in der Polyacrylatlösung reagiert, die Lösung ist schon anvernetzt (angegelt bzw. vergelt) und nicht mehr gleichmäßig beschichtbar.

Insbesondere aus Umweltschutzgründen entwickelt sich der technologische Prozess zur Herstellung von Haftklebmassen immer weiter. Durch restriktiver werdende Umweltauflagen und steigende Preise für Lösungsmittel ist man bestrebt, die Lösungsmittel aus dem Fertigungsprozess für Klebmassen und Klebebänder so weit wie möglich zu eliminieren. In der Industrie sind daher Schmelzverfahren (auch als Heißschmelzverfahren oder Hotmeltverfahren bezeichnet) mit lösungsmittelfreier Beschichtungstechnik zur Herstellung von Klebeprodukten, insbesondere von Haftklebmassen, von wachsender Bedeutung. Hierbei werden schmelzfähige Polymermassen, also Polymermassen, die bei erhöhten Temperaturen ohne Zersetzung in den fließfähigen Zustand übergehen, verarbeitet. Solche Massen lassen sich hervorragend aus diesem Schmelzzustand heraus verarbeiten. In Weiterentwicklungen des Prozesses kann die Herstellung auch lösungsmittelarm oder lösungsmittelfrei durchgeführt werden.

Die Einführung der Hotmelt-Technologie stellt wachsende Anforderungen an die Klebmassen. Insbesondere schmelzfähige Polyacrylatmassen (andere Bezeichnungen: "Polyacrylathotmelts", "Acrylathotmelts") werden sehr intensiv auf Verbesserungen hin untersucht. Bei der Beschichtung von Polyacrylatmassen aus der Schmelze ist die thermische Vernetzung bislang nicht sehr verbreitet, obwohl dieses Verfahren Vorteile hat.

Bislang werden Acrylathotmelts vor allem durch strahlenchemische Verfahren (UV-Bestrahlung, ESH-Bestrahlung) vernetzt. Diese Verfahrensweise ist aber mit diversen Nachteilen verbunden:

- Im Falle der Vernetzung mittels UV-Strahlen sind nur UV-durchlässige Schichten vernetzbar.
- Im Falle der Vernetzung mit Elektronenstrahlen (Elektronenstrahlvernetzung bzw. Elektronenstrahlenhärtung, auch ESH) besitzen die Elektronenstrahlen nur eine begrenzte Eindringtiefe, die abhängig von Dichte des bestrahlten Materials und von der Beschleunigerspannung ist.
- In beiden vorgenannten Verfahren weisen die Schichten nach der Vernetzung ein Vernetzungsprofil auf, die Haftklebeschicht vernetzt nicht homogen.

Die Haftklebeschicht muss relativ dünn sein, damit gut vernetzte Schichten erhalten werden. In Abhängigkeit von Dichte, Füllstoffen, Beschleunigerspannung (ESH) und aktiver Wellenlänge (UV) variiert die durchstrahlbare Dicke zwar, ist aber immer stark limitiert, so dass sich nicht beliebig dicke Schichten oder Schichten mit hohen Füllstoffanteilen durchvernetzen lassen, und zwar schon gar nicht homogen.

Im Stand der Technik sind einige Verfahren zur thermischen Vernetzung von Acrylathotmelts bekannt. Hierbei wird der Acrylatschmelze jeweils vor der Beschichtung ein Vernetzer zugesetzt, dann wird ausgeformt und zur Rolle gewickelt.

DE 10 2004 044 086 A1 beschreibt ein Verfahren zur thermischen Vernetzung von Acrylathotmelts, bei dem ein lösemittelfreies, funktionalisiertes Acrylatcopolymer, welches nach Zudosieren eines thermisch reaktiven Vernetzers eine für das Compoundieren, Fördern und Beschichten ausreichend lange Verarbeitungszeit hat, auf eine bahnförmige Schicht eines weiteren Materials aufgetragen wird. Das Material vernetzt nach der Beschichtung unter milden Bedingungen nach, bis eine für Haftklebebänder ausreichende Kohäsion erreicht wird.

Nachteilig an diesem Verfahren ist, dass durch die Reaktivität des Vernetzers die freie Verarbeitungszeit und der Vernetzungsgrad vorbestimmt werden. Bei der Verwendung von Isocyanaten reagieren diese zum Teil schon bei Zugabe, wodurch je nach System die gelfreie Zeit sehr kurz sein kann. Eine Masse mit einem höheren Anteil an funktionellen Gruppen wie Hydroxygruppen oder Carbonsäuregruppen ist dann nicht mehr in ausreichender Qualität beschichtbar. Ein streifiges, mit Gelstippen durchsetztes, also inhomogenes Strichbild wäre die Folge.

Weiterhin ergibt sich das Problem, dass der erzielbare Vernetzungsgrad begrenzt ist. Wenn durch Zusatz einer höheren Vernetzermenge ein höherer Vernetzungsgrad gewünscht ist, hat dies bei Verwendung multifunktioneller Isocyanate Nachteile. Die Masse würde zu schnell reagieren und wäre - wenn überhaupt - nur mit sehr geringer Verarbeitungszeit und somit sehr hoher Prozessgeschwindigkeit beschichtbar, was die Problematik des inhomogenen Beschichtungsbildes verschärfen würde.

EP 1 317 499 A beschreibt ein Verfahren zur Vernetzung von Polyacrylaten über eine UV-initiierte Epoxidvernetzung, bei denen die Polyacrylate während der Polymerisation mit entsprechenden Gruppen funktionalisiert wurden. Das Verfahren bietet Vorteile bezüglich der Scherfestigkeit der vernetzten Polyacrylate gegenüber konventionellen Vernetzungsmechanismen, insbesondere gegenüber der Elektronenstrahl-Vernetzung. In dieser Schrift wird die Verwendung von di- oder multifunktionellen sauerstoffhaltigen Verbindungen, insbesondere von di- oder multifunktionellen Epoxiden oder Alkoholen, als Vernetzungsreagenz für funktionalisierte Polyacrylate, insbesondere funktionalisierte Acrylatschmelzhaftkleber, beschrieben.

Da die Vernetzung durch UV-Strahlen initiiert wird, ergeben sich auch hier die bereits genannten Nachteile.

EP 1 978 069 A1, EP 2 186 869 A1, US 2012 0328873 und EP 2 192 148 A1 offenbaren Vernetzer-Beschleuniger-Systeme für die thermische Vernetzung von Polyacrylaten, die eine epoxid- oder oxetangruppenhaltige Substanz als Vernetzer und eine bei einer Temperatur unterhalb der Schmelztemperatur des Polyacrylats für eine Verknüpfungsreaktion zwischen den Polyacrylaten und den Epoxid- oder Oxetangruppen beschleunigend wirkende Substanz umfassen. Als Beschleuniger werden beispielsweise Amine oder Phosphine vorgeschlagen. Diese Systeme sind in Heißschmelzverfahren bereits gut einsetzbar, wünschenswert wäre aber eine Erhöhung der Vernetzungsgeschwindigkeit des Polyacrylats nach der Ausformung. Die beschleunigend wirkenden Substanzen haben sich als nachteilig bei Verklebungen unter feuchtwarmen Bedingungen herausgestellt, da sie zum Substrat migrieren und das Eindringen von Wasser zwischen Klebmasse und Substrat begünstigen können.

Eine weitere Klasse von Vernetzern, die insbesondere aufgrund der guten Kontrollierbarkeit der Vernetzungsreaktion vermehrt eingesetzt werden, sind Alkoxysilane. WO 2008 116 033 A1 beschreibt Acrylathaftklebmassen, die Silyl-funktionalisierte Comonomere umfassen, welche durch Luftfeuchtigkeit vernetzen können. Der Einbau solcher Monomere erschwert aber die Herstellung eines lösungsmittelfreien Polymers, welches als Hotmelt weiter verarbeitbar ist, da es schon bei der Entfernung des Lösungsmittels bzw. während der Polymerisation zu einer Vernetzungsreaktion kommen kann.

In US 2007/0219285 A1 werden Haftklebemassen aus einem Gemisch eines Polyacrylats mit Silan-terminierten Oligomeren beschrieben, welche durch UV-initiierte Freisetzung einer Brønsted-Säure in Anwesenheit von Feuchtigkeit vernetzen. Trotz einer stabilen Verarbeitung dieser Massesysteme haben die Produkte den Nachteil, dass die freigesetzten Säuren migrieren und zur Korrosion oder Zersetzung des Substrates führen können.

UV-initiierbare, Silan-basierte Vernetzer werden in US 5,552,451 A1 offenbart, allerdings weisen auch diese die zuvor benannten Nachteile auf.

DE 10 2013 020 538 A1 offenbart eine Haftklebmasse, die ein Organosilan mit einer Glycidyl-, Glycidyloxy- oder Mercaptogruppe sowie einer Alkoxysilylendgruppe enthält. Das Organosilan wird nicht explizit an die Haftklebmasse gebunden.

Aufgabe der vorliegenden Erfindung ist es, eine thermische Vernetzung von aus der Schmelze verarbeitbaren Polyacrylatmassen ("Polyacrylat-Hotmelts") zu ermöglichen, wobei für die Verarbeitung aus der Schmelze eine hinreichend lange Topfzeit zur Verfügung stehen soll. Dies soll insbesondere im Vergleich mit bekannten thermischen Vernetzungssystemen für Polyacrylat-Hotmelts gelten. Vorzugsweise soll nach der Ausformung der Polyacrylatmasse eine Vernetzungsreaktion bei verringerten Temperaturen (beispielsweise bei Raumtemperatur) stattfinden, die schneller abläuft als bei den bisher bekannten Systemen. Daneben sollen die so herstellbaren Produkte eine verbesserte Feucht-Wärme-Stabilität und eine gute Wärmescherfestigkeit aufweisen sowie als Haftklebmasse nutzbar sein, d.h. entsprechende klebtechnische Eigenschaften aufweisen.

Bei all dem soll auf den Einsatz von Schutzgruppen, die gegebenenfalls durch aktinische Strahlung oder andere Methoden wieder entfernt werden müssen, und flüchtigen Verbindungen, die im Produkt verbleiben und ausdampfen, verzichtet werden können. Weiter soll der Vernetzungsgrad der Polyacrylatmasse auf ein gewünschtes Niveau einstellbar sein, ohne dass die Vorteile der Prozessführung negativ beeinflusst werden.

Der Lösung der Aufgabe liegt der Gedanke zugrunde, ein Organosilan mit mindestens zwei verschiedenartigen Funktionalitäten als Vernetzer einzusetzen. Ein erster allgemeiner Gegenstand der Erfindung ist eine Haftklebemasse, erhältlich durch thermische Vernetzung einer Zusammensetzung, enthaltend

a) mindestens ein vernetzbares Poly(meth)acrylat;
b) mindestens ein Organosilan entsprechend der Formel (1)

$$R^1\text{-Si}(OR^2)_n R^3_m \qquad (1),$$

worin $R^1$ für einen eine cyclische Etherfunktion enthaltenden Rest,
die Reste $R^2$ unabhängig voneinander jeweils für einen Alkyl- oder Acylrest,
$R^3$ für eine Hydroxygruppe oder einen Alkylrest,
n für 2 oder 3 und m für die sich aus 3 - n ergebende Zahl stehen; und

c) mindestens eine die Reaktion des vernetzbaren Poly(meth)acrylats mit den cyclischen Etherfunktionen beschleunigende Substanz, dadurch gekennzeichnet, dass die die Reaktion des vernetzbaren Poly(meth)acrylats mit den cyclischen Etherfunktionen beschleunigende Substanz ein mindestens eine Aminogruppe und mindestens eine Alkoxy- oder Acyloxygruppe enthaltendes Organosilan ist.

Es hat sich gezeigt, dass mit dem erfindungsgemäßen Vernetzer-Beschleuniger-System, das den Vernetzer entsprechend der Formel (1) sowie eine die Vernetzungsreaktion beschleunigende Substanz umfasst, insbesondere sehr schnelle Vernetzungsreaktionen und eine verbesserte Feucht-Wärme-Beständigkeit der resultierenden Klebmassen erreicht werden. Überraschend war in diesem Zusammenhang auch, dass die erfindungsgemäße Zusammensetzung keiner weiteren Zugabe von Wasser oder Einwirkung von Luftfeuchtigkeit für die Vernetzung über die Silylgruppen bedurfte, um schon nach kurzer Zeit zum gewünschten Vernetzungsgrad des Produkts zu führen; die Restfeuchtigkeit des Polymers war somit ausreichend für die Vernetzung. Eine Erhöhung der Luftfeuchtigkeit während der Lagerung führte zu einer Beschleunigung der Vernetzungsreaktion, wobei ein ähnliches Vernetzungsniveau resultierte.

Unter einer Haftklebmasse wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G'' = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Unter einem "Poly(meth)acrylat" wird ein Polymer verstanden, dessen Monomerbasis zu mindestens 70 Gew.-% aus Acrylsäure, Methacrylsäure, Acrylsäureestern und/oder Methacrylsäureestern besteht, wobei Acrylsäureester und/oder Methacrylsäureester zu mindestens 50 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und/oder deren Derivaten als auch solche auf Basis von Acrylsäure und Methacrylsäure und/oder deren Derivaten als auch solche auf Basis von Methacrylsäure und/oder deren Derivaten.

Der Begriff "Poly(meth)acrylat" wird dementsprechend so verstanden, dass darunter sowohl Polyacrylate als auch Polymethacrylate als auch Copolymere aus Acrylat- und Methacrylatmonomeren subsummiert werden. Entsprechendes gilt für Bezeichnungen wie "(Meth)Acrylat" u. ä.

Unter einem "vernetzbaren Poly(meth)acrylat" wird ein Poly(meth)acrylat verstanden, das mit der Komponente b) der erfindungsgemäßen Zusammensetzung in der Weise chemisch reagieren kann, dass einzelne Polymerstränge des Poly(meth)acrylats dadurch und ggf. durch Folgereaktionen miteinander verbunden werden. Diese Reaktion wird erfindungsgemäß als "Vernetzungsreaktion" des Poly(meth)acrylats bezeichnet. Insbesondere enthält das vernetzbare Poly(meth)acrylat Funktionalitäten, die chemisch mit den cyclischen Ethergruppen des Organosilans entsprechend der Formel (1) reagieren können.

Die vernetzbaren Poly(meth)acrylate (im Folgenden auch einfach "das Poly(meth)acrylat" bzw. "die Poly(meth)acrylate") der erfindungsgemäßen Zusammensetzung enthalten bevorzugt weich machende Monomere, Monomere mit funktionellen Gruppen, die mit den cyclischen Etherfunktionen reagieren können, sowie optional weitere einpolymerisierbare Comonomere, insbesondere hartmachende Monomere. Um die Vernetzbarkeit des Poly(meth)acrylats der erfindungsgemäßen Zusammensetzung zu gewährleisten, enthält das Poly(meth)acrylat bevorzugt Funktionen ausgewählt aus Säuregruppen, diese besonders bevorzugt ausgewählt aus Carbonsäure-, Sulfonsäure- und Phosphonsäuregruppen; Hydroxygruppen, Säureanhydridgruppen und Aminogruppen. Besonders bevorzugt enthält das Poly(meth)acrylat der erfindungsgemäßen Zusammensetzung Hydroxy- und/oder Carbonsäuregruppen.

Bevorzugt umfasst die Monomerzusammensetzung des vernetzbaren Poly(meth)acrylats darüber hinaus mindestens ein Monomer ausgewählt aus Acrylsäure- und/oder Methacrylsäureestern mit bis zu 30 C-Atomen, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen und aliphatischen Kohlenwasserstoffen mit 2 bis 8 C-Atomen und einer oder zwei Doppelbindungen.

Die Natur des Poly(meth)acrylats und damit die Natur der herzustellenden Haftklebmasse lässt sich insbesondere über eine Variation der Glasübergangstemperatur des Polymers durch unterschiedliche Gewichtsanteile der einzelnen Monomere beeinflussen. Die Anteile der Monomere sind bevorzugt derart gewählt, dass das Poly(meth)acrylat eine statische Glasübergangstemperatur von $\leq 15\,°C$ aufweist. Die Angaben der statischen Glasübergangstemperaturen beziehen sich auf die Bestimmung mittels Differential Scanning Calorimetry (DSC).

Zur Ausrichtung der Monomerzusammensetzung auf eine gewünschte Glasübergangstemperatur wird vorteilhaft eine Gleichung (G1) in Analogie zur Fox-Gleichung (vgl. T.G. Fox, Bull. Am. Phys. Soc. 1 (1956) 123) herangezogen:

$$\frac{1}{T_G} = \sum_n \frac{w_n}{T_{G,n}} \qquad (G1).$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Bevorzugt kann das vernetzbare Poly(meth)acrylat der erfindungsgemäßen Zusammensetzung auf die folgende Monomerzusammensetzung zurückgeführt werden:

d) Acrylsäureester und/oder Methacrylsäureester der Formel (2)

$$CH_2 = C(R^I)(COOR^{II}) \qquad (2),$$

worin $R^I$ = H oder $CH_3$ und R" ein Alkylrest mit 4 bis 14 C-Atomen, besonders bevorzugt mit 4 bis 9 C-Atomen, ist;
e) olefinisch ungesättigte Monomere mit funktionellen Gruppen, die eine Reaktivität mit mindestens einem Organosilan entsprechend der Formel (1) aufweisen;
f) optional weitere olefinisch ungesättigte Monomere, die mit den Monomeren (d) und (e) copolymerisierbar sind.

Bevorzugt sind die Monomere der Komponente (d) zu einem Anteil von 45 bis 99 Gew.-%, die Monomere der Komponente (e) zu einem Anteil von 1 bis 15 Gew.-% und die Monomere der Komponente (f) zu einem Anteil von 0 bis 40 Gew.-% enthalten, jeweils bezogen auf das Gesamtgewicht der Monomerzusammensetzung.

Für eine Anwendung als Heißschmelzhaftkleber, also als ein Material, welches erst durch Erwärmen haftklebrig wird, werden die Anteile der Komponenten (d), (e), und (f) bevorzugt derart gewählt, dass das Copolymer eine Glasübergangstemperatur ($T_G$) von 15 °C bis 100 °C aufweist, bevorzugt von 30 °C bis 80°C, besonders bevorzugt von 40 °C bis 60 °C.

Ein viskoelastisches Material, welches beidseitig mit haftklebrigen Schichten kaschiert sein kann, hat bevorzugt eine Glasübergangstemperatur ($T_G$) von -70 °C bis 100 °C, bevorzugt von -50 °C bis 60°C, besonders bevorzugt von -45 °C bis 40 °C. Die Anteile der Monomere (d), (e), und (f) können auch hierfür entsprechend gewählt werden.

Die Monomere der Komponente (d) sind insbesondere weichmachende und/oder unpolare Monomere. Bevorzugt werden als Monomere (d) (Meth)Acrylmonomere eingesetzt, die aus Acryl- und Methacrylsäureestern mit Alkylgruppen, bestehend aus 4 bis 18 C-Atomen, ausgewählt sind. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, Dodecylacrylat, Heptadecylacrylat, Octadecylacrylat und deren verzweigte Isomere, wie z. B. 2-Ethylhexylacrylat und 2-Ethylhexylmethacrylat.

Die Monomere der Komponente (e) sind insbesondere olefinisch ungesättigte Monomere mit funktionellen Gruppen, die eine Reaktion mit den cyclischen Ethergruppen eingehen können. Bevorzugt sind die Monomere (e) ausgewählt aus olefinisch ungesättigten Monomeren, die Hydroxy-, Carboxy-, Sulfonsäure-, Phosphonsäure-, Säureanhydrid- und/oder Aminogruppen enthalten. Besonders bevorzugt sind die Monomere der Komponente (d) ausgewählt aus Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure, Maleinsäureanhydrid, 2-Hydroxyethylacrylat, 3-Hydroxypropylacrylat, 2-Hydroxyethylmethacrylat, 3-Hydroxypropylmethacrylat, 6-Hydroxyhexylmethacrylat und Allylalkohol.

Prinzipiell können als Monomere (f) alle vinylisch funktionalisierten Verbindungen eingesetzt werden, die mit den Monomeren (d) und/oder (e) copolymerisierbar sind. Bevorzugt sind die Monomere (f) ausgewählt aus Methylacrylat, Ethylacrylat, Propylacrylat, Methylmethacrylat, Ethylmethacrylat, Benzylacrylat, Benzylmethacrylat, Phenylacrylat, Phenylmethacrylat, Isobornylacrylat, Isobornylmethacrylat, *tert*-Butylphenylacrylat, *tert*-Butylphenylmethacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, *N,N*-Diethylaminoethylacrylat, *N,N*-Diethylaminoethylmethacrylat, *N,N*-Dimethylaminoethylacrylat, *N,N*-Dimethylaminoethylmethacrylat, 3-Methoxyacrylsäuremethylester, 3-Methoxybutylacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,3,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, N-(n-Butoxymethyl)acrylamid, *N*-(Butoxymethyl)methacrylamid, *N*-(Ethoxymethyl)acrylamid, *N*-(n-Octadecyl)acrylamid; *N,N*-Dialkyl-substituierten Amiden wie beispielsweise *N,N*-Dimethylacrylamid, *N,N*-Dimethylmethacrylamid; *N*-Benzylacrylamid, *N*-Isopropylacrylamid, *N-tert*-Butylacrylamid, *N-tert*-Octylacrylamid, *N*-Methylolacrylamid, *N*-Methylolmethacrylamid; Acrylnitril, Methacrylnitril; Vinylethern wie Vinylmethylether, Ethylvinylether, Vinylisobutylether; Vinylestern wie Vinylacetat; Vinylchlorid, Vinylhalogeniden, Vinylidenchlorid, Vinylidenhalogeniden, Vinylpyridin, 4-Vinylpyridin, *N*-Vinylphthalimid, *N*-Vinyllactam, *N*-Vinylpyrrolidon, Styrol, o- und p-Methylstyrol, $\alpha$-Butylstyrol, 4-n-Butylstyrol, 4-n-Decylstyrol, 3,4-Dimethoxystyrol, Makromonomeren wie 2-Polystyrolethylmethacrylat (Molekulargewicht Mw von 4000 bis 13000 g/mol) und Poly(Methylmethacrylat)ethylmethacrylat (Mw von 2000 bis 8000 g/mol).

Monomere der Komponente (f) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat- und acrylatfunktionalisierte Benzophenonderivat-Monomere, Tetrahydrofufurylacrylat, *N-tert*-Butylacrylamid und Allylacrylat.

Besonders bevorzugt sind, sofern die erfindungsgemäße Zusammensetzung mehrere vernetzbare Poly(meth)acrylate enthält, alle vernetzbaren Poly(meth)acrylate der erfindungsgemäßen Zusammensetzung auf die vorstehend beschriebene Monomerzusammensetzung zurückzuführen.

Die Herstellung der Poly(meth)acrylate kann nach dem Fachmann geläufigen Verfahren geschehen, insbesondere durch konventionelle radikalische Polymerisationen oder kontrollierte radikalische Polymerisationen. Die Poly(meth)acrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser, flüssigen Kohlenwasserstoffen oder in Lösung polymerisiert.

Vorzugsweise werden die Polyacrylate durch Polymerisation der Monomeren in Lösungsmitteln, insbesondere in Lösungsmitteln eines Siedebereichs von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-%, bezogen auf das Gesamtgewicht der Monomeren, liegen, hergestellt.

Prinzipiell eignen sich alle dem Fachmann für Acrylate geläufigen Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-*tert*-butylperoxid, Cyclohexyl-sulfonylacetylperoxid, Diisopropylpercarbonat, *tert*-Butylperoktoat, Benzpinacol. Bevorzugt werden als radikalische Initiatoren 2,2'-Azobis(2-methylbutyronitril) (Vazo® 67™ der Fa. DUPONT) oder 2,2'-Azobis(2-methylpropionitril)(2,2'-Azobisisobutyronitril; AIBN; Vazo® 64™ der Fa. DUPONT) verwendet.

Als Lösungsmittel kommen Alkohole wie Methanol, Ethanol, n-und *iso*-Propanol, n-und *iso*Butanol, vorzugsweise Isopropanol und/oder Isobutanol; sowie Kohlenwasserstoffe wie Toluol und insbesondere Benzine eines Siedebereichs von 60 bis 120 °C in Frage. Insbesondere können Ketone, z. B. Aceton, Methylethylketon, Methylisobutylketon, und Ester, z. B. Essigsäureethylester, sowie Gemische der genannten Lösungsmittel eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsgemisch, enthalten, vorgezogen werden.

Die gewichtsmittleren Molekulargewichte Mw der Poly(meth)acrylate betragen bevorzugt von 20.000 bis 2.000.000 g/mol; stärker bevorzugt von 100.000 bis 1.500.000 g/mol, besonders bevorzugt von 400.000 bis 1.200.000 g/mol (Gelpermeationschromatographie, siehe experimenteller Teil). Zur Einstellung dieser Werte kann es vorteilhaft sein, die Polymerisation in Gegenwart geeigneter Polymerisationsregler wie Thiole, Halogenverbindungen und/oder Alkohole durchzuführen.

Das Poly(meth)acrylat der erfindungsgemäßen Zusammensetzung hat vorzugsweise einen K-Wert von 30 bis 90, besonders bevorzugt von 40 bis 70, gemessen in Toluol (1%ige Lösung, 21 °C). Der K-Wert nach FIKENTSCHER ist ein Maß für das Molekulargewicht und die Viskosität des Polymers.

Die erfindungsgemäße Zusammensetzung umfasst mindestens ein Organosilan entsprechend der Formel (1)

$$R^1\text{-}Si(OR^2)_nR^3_m \qquad (1),$$

worin $R^1$ für einen eine cyclische Etherfunktion enthaltenden Rest,
die Reste $R^2$ unabhängig voneinander jeweils für einen Alkyl- oder Acylrest,
$R^3$ für eine Hydroxygruppe oder einen Alkylrest, und
n für 2 oder 3 und m für die sich aus 3 - n ergebende Zahl stehen.

Derartige Organosilane können mit reaktiven Gruppen des vernetzbaren Poly(meth)acrylats reagieren. Es ist erfindungsgemäß vorgesehen, dass es sowohl zu einer Verknüpfung reaktiver Gruppen der vernetzbaren Poly(meth)acrylate mit den cyclischen Etherfunktionen als auch zu Kondensationsreaktionen der hydrolysierbaren Silylgruppen der Organosilane entsprechend der Formel (1) untereinander kommt. Die Organosilane entsprechend der Formel (1) ermöglichen auf diese Weise eine Verknüpfung der Poly(meth)acrylate untereinander und werden dabei in das entstehende Netzwerk eingebaut.

Der Rest $R^1$ in der Formel (1) enthält bevorzugt eine Epoxid- oder Oxetangruppe als cyclische Etherfunktion. Besonders bevorzugt enthält $R^1$ eine Glycidyloxy-, 3-Oxetanyl-methoxy- oder Epoxycyclohexylgruppe. Ebenfalls bevorzugt steht $R^1$ für einen eine Epoxide- oder Oxetangruppe enthaltenden Akyl- oder Alkoxyrest mit 2 bis 12 Kohlenstoffatomen. $R^1$ ist insbesondere ausgewählt aus der Gruppe bestehend aus einem 3-Glycidyloxypropylrest, einem 3,4-Epoxycyclohexylrest, einem 2-(3,4-Epoxycyclohexyl)ethylrest und einem 3-[(3-Ethyl-3-oxetanyl)-methoxy]propylrest.

Die Reste $R^2$ in der Formel (1) stehen bevorzugt unabhängig voneinander jeweils für eine Alkylgruppe, besonders bevorzugt unabhängig voneinander jeweils für eine Methyl-, Ethyl-, Propyl- oder Isopropylgruppe und ganz besonders bevorzugt unabhängig voneinander jeweils für eine Methyl- oder Ethylgruppe. Dies ist vorteilhaft, weil sich Alkoxygruppen und insbesondere Methoxy- und Ethoxygruppen leicht und schnell hydrolysieren lassen und die als Spaltprodukte entstehenden Alkohole sich vergleichsweise leicht aus der Zusammensetzung entfernen lassen und keine kritische Toxizität aufweisen.

$R^3$ in der Formel (1) steht bevorzugt für eine Methylgruppe.

Das mindestens eine Organosilan entsprechend der Formel (1) ist besonders bevorzugt ausgewählt aus der Gruppe bestehend aus (3-Glycidyloxypropyl)trimethoxysilan (CAS-Nr. 2530-83-8, bspw. Dynasylan® GLYMO, Evonik), (3-Glycidyloxypropyl)triethoxysilan (CAS-Nr. 2602-34-8, bspw. Dynasylan® GLYEO, Evonik), (3-Glycidyloxypropyl)methyldimethoxysilan (CAS-Nr. 65799-47-5, bspw. Gelest Inc.), (3-Glycidyloxypropyl)methyldiethoxysilan (CAS-Nr. 2897-60-1, bspw. Gelest Inc.), 5,6-Epoxyhexyltriethoxysilan (CAS-Nr. 86138-01-4, bspw. Gelest Inc.), [2-(3,4-Epoxycyclohexyl)ethyl]trimethoxysilan (CAS-Nr. 3388-04-3, bspw. Sigma-Aldrich), [2-(3,4-Epoxycyclohexyl)ethyl]triethoxysilan (CAS-Nr. 10217-34-2, bspw. ABCR GmbH), Triethoxy[3-[(3-ethyl-3-oxetanyl)methoxy]propyl]silan (CAS-Nr. 220520-33-2, bspw. Aron Oxetane OXT-610, Toagosei Co., Ltd.).

Organosilane entsprechend der Formel (1) sind in der erfindungsgemäßen Zusammensetzung bevorzugt zu insgesamt 0,05 bis 3 Gew.-%, stärker bevorzugt zu 0,05 bis 1 Gew.-%, insbesondere zu 0,05 bis 0,5 Gew.-%, beispielsweise zu 0,05 bis 0,3 Gew.-%, jeweils bezogen auf das Gesamtgewicht der Zusammensetzung, enthalten.

Erfindungsgemäß können zusätzlich zu dem bzw. den Organosilanen entsprechend der Formel (1) auch multifunktionelle Epoxide oder Oxetane als Vernetzer in der erfindungsgemäßen Zusammensetzung enthalten sein. Diese sind bevorzugt ausgewählt aus 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Bisphenol-A-Diglycidether, Bisphenol-F-Diglycidether, Bis[1-ethyl(3-oxetanyl)]methylether, 2,4:3,5-Dianhydrido-1,6-di-O-benzoyl-mannitol und 1,4-Bis[2,2-dimethyl-1,3-dioxolan-4-yl]-3,3-dimethyl-2,5-dioxabicyclo[2.1.0]pentan.

Die erfindungsgemäße Haftklebemasse enthält ferner mindestens eine die Reaktion des vernetzbaren Poly(meth)acrylats mit den cyclischen Etherfunktionen beschleunigende Substanz (Beschleuniger). Beschleunigend wirkende Substanz bedeutet insbesondere, dass die Substanz die erste Vernetzungsreaktion - die Anbindung der cyclischen Etherfunktionen an das Poly(meth)acrylat - insofern unterstützt, dass für eine hinreichende Reaktionsgeschwindigkeit gesorgt ist, während die Reaktion in Abwesenheit des Beschleunigers, insbesondere unterhalb der Schmelztemperatur der Poly(meth)acrylate, nicht oder nur unzureichend langsam ablaufen würde. Ein solcher Beschleuniger ist per se auch in der Lage, die Hydrolyse des organischen Silans in Anwesenheit von Feuchtigkeit und die nachfolgende Kondensationsreaktion der dadurch entstandenen Silanole zu beschleunigen. Der Beschleuniger sorgt also für eine wesentliche Verbesserung der Kinetik der Vernetzungsreaktion. Dies kann erfindungsgemäß auf katalytische Weise, aber auch durch Einbindung in das Reaktionsgeschehen erfolgen.

Zur Definition einer Schmelze eines amorphen Polymers wie beispielsweise eines Poly(meth)acrylats wird erfindungsgemäß auf die in F. R. Schwarzl, Polymermechanik: Struktur und mechanisches Verhalten von Polymeren, Springer Verlag, Berlin, 1990 auf den Seiten 89 ff. verwendeten Kriterien verwiesen, wonach die Viskosität eine Größenordnung von etwa $n \approx 10^4$ Pa·s aufweist und die innere Dämpfung tan $\delta$ Werte von $\geq 1$ erreicht, verwendet.

Die die Reaktion des vernetzbaren Poly(meth)acrylats mit den cyclischen Etherfunktionen beschleunigende Substanz enthält mindestens eine Aminogruppe. Unter den Aminogruppen sind solche bevorzugt, die mit den Bausteinen der Poly(meth)acrylate keine oder nur sehr langsame Reaktionen eingehen. "Langsame Reaktionen" bedeutet in diesem Zusammenhang "Reaktionen, die wesentlich langsamer ablaufen als die Aktivierung der cyklischen Etherfunktionen". Durch die im Beschleuniger enthaltene Aminogruppe wird nicht nur die Reaktion der reaktiven Gruppen des Poly(meth)acrylats mit den cyclischen Ethergruppen des Vernetzers entsprechend der Formel (1), sondern auch die Hydrolyse der organischen Silane entsprechend der Formel (1) sowie die sich daran anschließende Kondensationsreaktion der entstandenen Silanole beschleunigt. Die Bechleunigersubstanz wirkt also beschleunigend für den gesamten Vernetzungsmechanismus.

Die die Reaktion des vernetzbaren Poly(meth)acrylats mit den cyclischen Etherfunktionen beschleunigende Substanz ist ein mindestens eine Aminogruppe und mindestens eine Alkoxy- oder Acyloxygruppe enthaltendes Organosilan. Damit kann die beschleunigend wirkende Substanz über die Silanfunktionalität mit ins entstehende Netzwerk eingebaut werden, und die Produkteigenschaften können noch feiner eingestellt werden. Insbesondere ist die die Reaktion des Poly(meth)acrylats mit den cyclischen Etherfunktionen beschleunigende Substanz ausgewählt aus der Gruppe bestehend aus N-Cyclohexyl-3-aminopropyltrimethoxysilan (CAS-Nr. 3068-78-8, bspw. Wacker), N-Cyclohexylaminomethyltriethoxysilan (CAS-Nr. 26495-91-0, bspw. Wacker), 3-Aminopropyltrimethoxysilan (CAS-Nr. 13822-56-5, bspw. Gelest Inc.), 3-Aminopropyltriethoxysilan (CAS-Nr. 919-30-2, bspw. Gelest Inc.), 3-Aminopropylmethyldiethoxysilan (CAS-Nr. 3179-76-8, bspw. Gelest Inc., 3-(2-Aminomethylamino)propyltriethoxysilan (CAS-Nr. 5089-72-5, bspw. Wacker), 3-(N,N-Dimethylaminopropyl)trimethoxysilan (CAS-Nr. 2530-86-1, bspw. Geist Inc.), Bis(2-hydroxyethyl)-3-aminopropyltriethoxysilan (CAS-Nr. 7538-44-5, bspw. Gelest Inc.).

Der Einsatz eines Beschleunigers ist grundsätzlich von Vorteil, weil z. B. Epoxide ohne entsprechende Beschleuniger nur unter Wärmeeinfluss reagieren, und zwar insbesondere erst nach längerer Zufuhr thermischer Energie. Oxetane wiederum würden ohne Katalysatoren bzw. Beschleuniger noch schlechter reagieren. Einige Beschleunigersubstanzen wie zum Beispiel $ZnCl_2$ führen zwar zur Verbesserung der Reaktivität im Temperaturbereich der Schmelze, aber bei fehlender Zufuhr thermischer Energie von außen (also beispielsweise bei Raumtemperatur) lässt die Reaktivität vieler Epoxide oder Oxetane auch in Gegenwart der Beschleuniger nach, so dass die Vernetzungsreaktion langsamer verläuft. Dies ist insbesondere dann nachteilig, wenn als Hotmelt verarbeitete Poly(meth)acrylate innerhalb relativ kurzer Zeiträume (bspw. einige Minuten) beschichtet werden und dann mangels weiterer Wärmezufuhr rasch bis zur Raumtemperatur bzw. Lagerungstemperatur abkühlen. Ohne die Initiierung einer weiteren Vernetzungsreaktion können in diesen Fällen keine sehr hohen Vernetzungsgrade erzielt werden, was in einer für bestimmte Anwendungsbereiche von Polyacrylaten zu geringen Kohäsion resultieren würde.

Würde das Vernetzersystem mit eher in der Wärme funktionierenden Beschleunigern, beispielsweise Epoxidoder Oxetanvernetzer mit $ZnCl_2$, andererseits zu früh in das Polyacrylat-System gegeben werden (um einen hohen Vernetzungsgrad zu erzielen), so könnte man die Massen nicht mehr homogen verarbeiten, insbesondere compoundieren und beschichten, da sie zu schnell zu stark vernetzen würden.

Basische Beschleuniger gewährleisten demgegenüber längere Topfzeiten sowie eine verbesserte Einstellbarkeit der gewünschten Kohäsion des Polymers.

Durch die Kombination der erfindungsgemäßen Silan-Vernetzer entsprechend der Formel (1) mit den eine Aminogruppe und eine hydrolysierbare Silylgruppe umfassenden Beschleunigern wird ein thermisches Vernetzungsverfahren ermöglicht, dass bei der Verarbeitung von Polyacrylatmassen in der Schmelze weniger anfällig für unkontrollierte Reaktionen (Vergelung der Masse) ist und vorteilhaft lange Topfzeiten belässt. Somit kann insbesondere bei der Ausstreichung als Schicht oder der Auftragung auf einen Träger ein gleichmäßiges und blasenfreies Strichbild geschaffen werden. Das bevorzugte Vernetzer-Beschleuniger-System ermöglicht zudem eine optimale Weitervernetzung des Polyacrylats nach der Verarbeitung, insbesondere nach Ausstreichung als Schicht oder der Auftragung auf einen Träger, und nach der damit verbundenen Abkühlung. Dies geschieht, ohne dass dazu aktinische Bestrahlung notwendig wäre, mit einer hohen Vernetzungsgeschwindigkeit und erbringt zudem verbesserte Produkteigenschaften.

Insbesondere sind die Poly(meth)acrylate durch das bevorzugte Vernetzer-Beschleuniger-System also in der Lage, ohne weitere aktiv, also verfahrenstechnisch, zugeführte thermische Energie (Beheizung) weiter zu vernetzen. Dies gilt insbesondere auch für eine Abkühlung der Poly(meth)acrylate bis auf Raumtemperatur. Es kann also vorteilhaft auf eine Beheizung verzichtet werden, ohne dass dies zu einer wesentlichen Verlangsamung der Vernetzungsreaktion führen würde. Das System kann also im Hotmeltprozess nach der thermischen Aktivierung auch bei Raumtemperatur nachvernetzen und nach einer gewissen Zeit einen stabilen Vernetzungsgrad erreichen.

Weiterhin weisen die eine Aminogruppe und eine hydrolysierbare Silylgruppe umfassenden Beschleuniger den Vorteil auf, dass sie als nichtflüchtige Komponente in der Klebmasse verbleiben, indem sie kovalent durch Kondensationsreaktion der Silylgruppen in das Polymer eingebaut werden und somit nicht mehr an die Grenzfläche zum Substrat migrieren können.

Vorteilhaft sind Beschleuniger zu insgesamt 0,07 - 2 Gew-%, bezogen auf das Gesamtgewicht der Zusammensetzung, in der erfindungsgemäßen Zusammensetzung enthalten.

Es ist besonders vorteilhaft, wenn der Vernetzeranteil derart gewählt wird, dass ein elastischer Anteil der vernetzten Polyacrylate von mindestens 20 % resultiert. Bevorzugt beträgt der elastische Anteil mindestens 40 %, weiter bevorzugt mindestens 60 % (jeweils gemessen nach Messmethode H3; vgl. experimenteller Teil).

Zur Angabe der Vernetzungsverhältnisse kann insbesondere das Verhältnis der Anzahl der cyclischen Etherfunktionen in den Organosilanen entsprechend der Formel (1) zur Anzahl der reaktiven funktionellen Gruppen in den Poly(meth)acrylaten herangezogen werden. Grundsätzlich kann dieses Verhältnis frei gewählt werden, so dass entweder ein Überschuss an funktionellen Gruppen auf Seiten der Poly(meth)acrylate, zahlenmäßige Gleichheit der Gruppen oder ein Überschuss an cyclischen Ethergruppen im Vernetzer vorliegt. Bevorzugt wird dieses Verhältnis derart gewählt, dass die cyclischen Ethergruppen der Organosilane entsprechend der Formel (1) im Unterschuss bis maximal zur zahlenmäßigen Gleichheit vorliegen. Besonders bevorzugt beträgt das Verhältnis der Gesamtzahl der cyclischen Ethergruppen der Organosilane entsprechend der Formel (1) zur Anzahl der diesen gegenüber reaktiven Gruppen der Poly(meth)acrylate von 0,05 : 1 bis 1 : 1. Daneben lassen sich die Eigenschaften der nach erfolgter Vernetzung erhaltenen Haftklebmasse - insbesondere deren Elastizität - auch über die Anzahl der mit Wasser abspaltbaren Gruppen in den Organosilanen entsprechend der Formel (1) sowie über die Menge der Beschleunigersubstanzen einstellen.

Eine weitere Kennzahl ist das Verhältnis der Anzahl beschleunigungswirksamer Gruppen im Beschleuniger zur Anzahl der cyclischen Ethergruppen im Vernetzer. Auch dieses Verhältnis kann grundsätzlich frei gewählt werden, so dass entweder ein Überschuss an beschleunigungswirksamen Gruppen, zahlenmäßige Gleichheit der Gruppen oder ein Überschuss der cyklischen Ethergruppen vorliegt. Bevorzugt beträgt das Verhältnis der Anzahl beschleunigungswirksamer Gruppen in den Beschleunigern zur Anzahl der cyclischen Ethergruppen im Vernetzer von 0,2 : 1 bis 4 : 1.

Bezüglich der hydrolysierbaren Silylgruppen der Vernetzer ist es bevorzugt, wenn das Verhältnis der Anzahl an -$OR^2$-Gruppen gemäß Formel (1) zur Gesamtanzahl der cyclischen Ethergruppen und der beschleunigend wirkenden basischen Gruppen mindestens 1,5 : 1, stärker bevorzugt mindestens 2 : 1 beträgt.

Die Zusammensetzung enthält in einer speziellen Ausführungsform mindestens ein klebrig machendes Harz. Das klebrig machende Harz ist bevorzugt ausgewählt aus aliphatischen, aromatischen und alkylaromatischen Kohlenwasserstoffharzen, hydrierten Kohlenwasserstoffharzen, funktionellen Kohlenwasserstoffharzen und Naturharzen. Besonders bevorzugt ist das klebrig machend Harz ausgewählt aus Pinen-, Inden- und Kolophoniumharzen, deren disproportionierten, hydrierten, polymerisierten und/oder veresterten Derivaten und Salzen, Terpenharzen und Terpenphenolharzen sowie C5-, C9- und anderen Kohlenwasserstoffharzen. Auch Kombinationen dieser und weiterer Harze können vorteilhaft eingesetzt werden, um die Eigenschaften der resultierenden Klebmasse wunschgemäß einzustellen. Insbesondere ist das klebrig machende Harz mit den Poly(meth)acrylaten der Zusammensetzung kompatibel, worunter im Wesentlichen "darin löslich" verstanden wird. Ganz besonders bevorzugt ist das klebrig machende Harz ausgewählt aus Terpenphenolharzen und Kolophoniumestern.

Die Zusammensetzung kann darüber hinaus pulver- und granulatförmige Füllstoffe, Farbstoffe und Pigmente wie z.B. Kreiden ($CaCO_3$), Titandioxide, Zinkoxide und Ruße auch zu hohen Anteilen, das heißt von 1 bis 50 Gew.-%, bezogen auf das Gesamtgewicht der Zusammensetzung, enthalten. Diese Substanzen zeichnen sich insbesondere durch ihre verstärkende bzw. abrasive Wirkung aus.

Bevorzugt enthält die Zusammensetzung mindestens eine Kreide, besonders bevorzugt Mikrosöhl-Kreide. Kreide ist bevorzugt zu maximal 30 Gew.-%, bezogen auf das Gesamtgewicht der Zusammensetzung, enthalten. Dies hat den Vorteil, dass sich dabei die klebtechnischen Eigenschaften wie Scherfestigkeit bei Raumtemperatur und Sofortklebkraft auf Stahl und PE praktisch nicht ändern, die Kreide andererseits aber als vorteilhaft verstärkender Füllstoff wirkt.

Weiter kann die Zusammensetzung schwer entflammbare Füllstoffe wie beispielsweise Ammoniumpolyphosphat und Aluminiumdiethylphosphinat; elektrisch leitfähige Füllstoffe wie beispielsweise Leitruß, Kohlenstofffasern und/oder silberbeschichtete Kugeln); thermisch leitfähige Materialien wie beispielsweise Bornitrid, Aluminiumoxid, Siliciumcarbid; ferromagnetische Additive wie beispielsweise Eisen-(III)-oxide; Additive zur Volumenerhöhung, insbesondere zur Herstellung geschäumter Schichten, wie beispielsweise Blähmittel, Glasvollkugeln, Glashohlkugeln, Mikrokugeln aus anderen Materialien, expandierbare Mikroballons; Kieselsäure, Silikate; organisch nachwachsende Rohstoffe, beispielsweise Holzmehl; organische und/oder anorganische Nanopartikel; Fasern; anorganische und/oder organische Farbstoffe in Form von Pasten, Compounds oder Pigmenten; Alterungsschutzmittel, Lichtschutzmittel, Ozonschutzmittel und/oder Compoundierungsmittel enthalten. Diese Bestandteile können vor oder nach der Aufkonzentration des Polyacrylats zugegeben oder eincompoundiert werden. Als Alterungsschutzmittel können sowohl primäre, z.B. 4-Methoxyphenol, als auch sekundäre Alterungsschutzmittel, z.B. Irgafos® TNPP der Fa. BASF, auch in Kombination miteinander; sowie Phenothiazin (C-Radikalfänger) oder Hydrochinonmethylether in Gegenwart von Sauerstoff sowie Sauerstoff selbst eingesetzt werden.

Die Zusammensetzung kann darüber hinaus einen oder mehrere Weichmacher (Plastifizierungsmittel), insbesondere in Konzentrationen von bis zu 5 Gew.-%, enthalten. Als Weichmacher können beispielsweise niedermolekulare Polyacrylate, Phthalate, wasserlösliche Weichmacher, Weichharze, Phosphate, Polyphosphate und/oder Citrate enthalten sein.

Ferner kann die Zusammensetzung neben dem vernetzbaren Poly(meth)acrylat andere Polymere enthalten, mit denen die Poly(meth)acrylate geblendet bzw. abgemischt vorliegen. Beispielsweise kann die Zusammensetzung mindestens ein Polymer ausgewählt aus Naturkautschuk, Synthesekautschuken, EVA, Siliconkautschuken, Acrylkautschuken und Polyvinylethern enthalten. Diese Polymere liegen bevorzugt granuliert oder andersartig zerkleinert vor. Bevorzugt werden sie vor Zugabe des thermischen Vernetzers zugesetzt. Die Herstellung der Polymerblends erfolgt bevorzugt in einem Extruder, stärker bevorzugt in einem Mehrwellenextruder oder in einem Planetwalzenmischer.

Zur Stabilisierung der thermisch vernetzten Acrylathotmelts, insbesondere auch von Polymerblends aus thermisch vernetzten Acrylathotmelts und anderen Polymeren, kann es sinnvoll sein, das ausgeformte Material mit Elektronenbestrahlung in geringen Dosen zu bestrahlen. Die erfindungsgemäße Zusammensetzung kann zu diesem Zweck entsprechende Vernetzungspromotoren wie di-, tri-, oder multifunktionelles Acrylat, Polyester und/oder Urethanacrylat enthalten.

Ein weiterer Aspekt der Erfindung betrifft ein Verfahren zur Vernetzung einer Zusammensetzung, die mindestens ein vernetzbares Poly(meth)acrylat, mindestens ein Organosilan entsprechend der Formel (1) und mindestens eine die Reaktion des vernetzbaren Poly(meth)acrylats mit den cyclischen Etherfunktionen beschleunigende Substanz enthält, wobei das Verfahren die Erwärmung der Zusammensetzung auf eine Temperatur, die für die Initiierung der Vernetzungsreaktion ausreichend ist, umfasst.

Bevorzugt wird im Rahmen des erfindungsgemäßen Verfahrens die Vernetzung in der Schmelze des Poly(meth)acrylats initiiert und das Poly(meth)acrylat danach zu einem Zeitpunkt abgekühlt, zu dem es noch hervorragend verarbeitbar, also beispielsweise homogen beschichtbar und/oder ausformbar ist. Insbesondere für Klebebänder ist ein homogenes, gleichmäßiges Strichbild erforderlich, wobei sich in der Klebmassenschicht keine Klumpen, Stippen oder ähnliches finden lassen sollen. Entsprechend homogene Polyacrylate werden auch für die anderen Anwendungsformen verlangt.

Ein Poly(meth)acrylat ist ausformbar, wenn es noch nicht oder erst zu einem geringen Grad vernetzt ist; vorteilhaft beträgt der Vernetzungsgrad des Poly(meth)acrylats bei Beginn der Abkühlung nicht mehr als 10 %, bevorzugt nicht mehr als 3 %, noch besser nicht mehr als 1 % des gewünschten endlichen Vernetzungsgrads. Die Vernetzungsreaktion schreitet bevorzugt auch nach der Abkühlung fort, bis der endliche Vernetzungsgrad erreicht ist. Der Begriff "abkühlen" umfasst hier und im Folgenden auch das passive Abkühlenlassen durch Entfernen der Beheizung.

Bevorzugt wird im Rahmen des erfindungsgemäßen Verfahrens die Vernetzung zu einem Zeitpunkt kurz vor der Weiterverarbeitung, insbesondere der Ausformung oder Beschichtung, initiiert. Dies findet für gewöhnlich in einem Verarbeitungsreaktor (Compounder, beispielsweise ein Extruder) statt. Dann wird die Masse aus dem Compounder entnommen und wie gewünscht weiterverarbeitet und/oder ausgeformt. Bei der Verarbeitung bzw. Ausformung oder danach wird das Polyacrylat abgekühlt, indem aktiv abgekühlt wird und/oder die Erwärmung eingestellt wird oder indem das Polyacrylat auf eine Temperatur unterhalb der Verarbeitungstemperatur beheizt wird (ggf. auch hier nach vorheriger aktiver Kühlung), wenn die Temperatur nicht bis auf Raumtemperatur abfallen soll.

Die Weiterverarbeitung bzw. Ausformung kann insbesondere die Beschichtung auf einen permanenten oder temporären Träger sein.

Bei einer vorteilhaften Variante des erfindungsgemäßen Verfahrens wird das Polyacrylat bei oder nach der Entnahme aus dem Verarbeitungsreaktor auf einen permanenten oder temporären Träger beschichtet und bei oder nach der Beschichtung auf Raumtemperatur (oder eine Temperatur in der Nähe der Raumtemperatur) abgekühlt, insbesondere unmittelbar nach der Beschichtung.

Initiierung "kurz vor" der Weiterverarbeitung bedeutet insbesondere, dass mindestens eine der zur Vernetzung erforderlichen Komponenten (bevorzugt ein Organosilan der Formel (1)) so spät wie möglich im Hotmelt (also in der Schmelze) zugesetzt wird, aber so früh wie nötig, um eine gute Homogenisierung mit der Polymermasse zu erreichen.

Das Vernetzer-Beschleuniger-System ist bevorzugt so gewählt, dass die Vernetzungsreaktion bei einer Temperatur unterhalb der Schmelztemperatur der Polyacrylatmasse, insbesondere bei Raumtemperatur, voranschreitet. Die Vernetzungsmöglichkeit bei Raumtemperatur bietet dabei den Vorteil, dass keine zusätzliche Energie zugeführt werden muss.

Die Bezeichnung "Vernetzung bei Raumtemperatur" bezieht sich dabei insbesondere auf die Vernetzung bei üblichen Lagertemperaturen von Klebebändern, viskoelastischen nichtklebrigen Materialien oder dergleichen und soll insofern nicht auf 20 °C beschränkt sein. Selbstverständlich ist es erfindungsgemäß auch vorteilhaft, wenn die Lagertemperatur aufgrund witterungsbedingter oder sonstiger Temperaturschwankungen von 20 °C abweicht oder die Raumtemperatur aufgrund lokaler Gegebenheiten von 20 °C differiert und die Vernetzung ohne weitere Energiezufuhr fortschreitet.

Die Herstellung der Zusammensetzung und somit auch das Verfahren zur Vernetzung der Zusammensetzung umfasst bevorzugt eine Aufkonzentration des vernetzbaren Poly(meth)acrylats. Die Aufkonzentration des Polymerisats kann in Abwesenheit der Vernetzer- und ggf. der Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate werden dann in einen Compounder überführt. In besonderen Ausführungen des erfindungsgemäßen Verfahrens können die Aufkonzentration und die Compoundierung im selben Reaktor stattfinden.

Insbesondere kann als Compounder ein Extruder eingesetzt werden. Die Poly(meth)acrylate liegen im Compounder in der Schmelze vor, entweder nachdem sie bereits im Schmelzezustand hineingegeben wurden oder nachdem sie im Compounder bis zur Schmelze erhitzt wurden. Im Compounder werden die Polymerisate durch Beheizung in der Schmelze gehalten.

Solange weder Vernetzer (Organosilan(e) entsprechend der Formel (1)) noch Beschleuniger im Polymerisat vorliegen, wird die mögliche Temperatur in der Schmelze durch die Zersetzungstemperatur des Polymerisats begrenzt. Die Prozesstemperatur im Compounder liegt üblicherweise zwischen 80 und 150 °C, insbesondere zwischen 100 und 120 °C.

Die Vernetzersubstanzen werden dem Polymerisat bevorzugt vor oder mit der Beschleunigerzugabe zugesetzt.

Die Organosilane entsprechend der Formel (1) können den Monomeren bereits vor oder während der Polymerisationsphase zugegeben werden, wenn sie für diese hinreichend stabil sind. Bevorzugt werden sie dem Polymerisat aber entweder vor oder während der Aufgabe in den Compounder zugesetzt, also zusammen mit den Polymerisaten in den Compounder gegeben.

Die Beschleunigersubstanzen werden den Polymerisaten bevorzugt kurz vor der Weiterverarbeitung, insbesondere kurz vor der Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden. Mit dem erfindungsgemäßen Verfahren konnten Topfzeiten von einigen Minuten bis zu einigen zehn Minuten erzielt werden (je nach Wahl der Versuchsparameter), so dass der Beschleuniger innerhalb dieser Zeitspanne vor der Beschichtung zugesetzt werden sollte. Idealerweise wird der Beschleuniger so spät wie möglich dem Hotmelt zugesetzt, aber so früh wie nötig, um noch eine gute Homogenisierung mit der Polymermasse zu gewährleisten.

Als sehr vorteilhaft haben sich dafür Zeitspannen von 2 bis 10 Minuten, insbesondere von mehr als 5 Minuten, bei einer Prozesstemperatur von 110 bis 120 °C herausgestellt.

Die Vernetzer und die Beschleuniger können auch beide kurz vor der Weiterverarbeitung des Polymers zugesetzt werden. Hierzu ist es vorteilhaft, das Vernetzer-Beschleuniger-System an ein- und derselben Stelle gleichzeitig in den Prozess einzubringen.

Grundsätzlich ist es auch möglich, die Zugabezeitpunkte bzw. Zugabestellen für Vernetzer und Beschleuniger gemäß den vorstehenden Ausführungen zu vertauschen, so dass der Beschleuniger vor den Vernetzersubstanzen zugesetzt wird.

Im Compoundierungsprozess beträgt die Temperatur des Polymerisats bei der Zugabe der Vernetzer und/oder der Beschleuniger zwischen 50 und 150 °C, bevorzugt zwischen 70 und 130 °C, besonders bevorzugt zwischen 80 und 120 °C.

Nach der Compoundierung der Masse erfolgt deren Weiterverarbeitung, insbesondere die Beschichtung auf einen permanenten oder auf einen temporären Träger. Ein permanenter Träger bleibt bei der Anwendung mit der Klebmassenschicht verbunden, während ein temporärer Träger in dem weiteren Verarbeitungsprozess, zum Beispiel der Konfektionierung des Klebebandes, oder bei der Anwendung wieder von der Klebmassenschicht abgenommen wird.

Die Beschichtung der Selbstklebemassen kann mit dem Fachmann bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine, stärker bevorzugt sind alle Walzen, die mit der Masse in Berührung kommen, mit einer anti-adhäsiven Walzenoberfläche versehen. Demnach können alle Walzen des Kalanders anti-adhäsiv ausgerüstet sein. Als anti-adhäsive Walzenoberfläche wird bevorzugt ein Stahl-Keramik-Silikon-Verbundwerkstoff eingesetzt. Derartige Walzenoberflächen sind gegen thermische und mechanische Belastungen resistent. Besonders vorteilhaft werden Walzenoberflächen eingesetzt, die eine Oberflächenstruktur aufweisen, insbesondere dergestalt, dass die Walzenoberfläche keinen vollständigen Kontakt zu der zu verarbeitenden Polymerschicht herstellt. Das bedeutet, dass die Kontaktfläche - verglichen mit einer glatten Walze - geringer ist. Besonders günstig sind strukturierte Walzen wie Metall-Rasterwalzen, beispielsweise Stahlrasterwalzen.

Die Beschichtung kann insbesondere entsprechend den Beschichtungsverfahren, wie sie in WO 2006/027387 A1 auf Seite 12, Zeile 5 bis Seite 20, Zeile 13 dargestellt sind, erfolgen. Der diesbezügliche Offenbarungsgehalt der WO 2006/027387 A1 sei daher explizit in den Offenbarungsgehalt der vorliegenden Schrift eingeschlossen.

Besonders gute Ergebnisse werden bei Zwei- und Dreiwalzenkalanderwerken durch die Verwendung von Kalanderwalzen erzielt, die mit anti-adhäsiven oder modifizierten Oberflächen ausgestattet sind; besonders bevorzugt sind Metall-Rasterwalzen. Diese weisen eine regelmäßig geometrisch unterbrochene Oberflächenstruktur auf. Dies gilt insbesondere vorteilhaft für die Überführungswalze ÜW. Die speziellen Oberflächen tragen in besonders vorteilhafter Weise zu einem Gelingen des Beschichtungsverfahrens bei, da anti-adhäsive und strukturierte Oberflächen die Übertragung der Polyacrylatmasse selbst auf anti-adhäsiv ausgerüstete Trägeroberflächen ermöglichen. Verschiedene Arten anti-adhäsiver Oberflächenbeschichtungen können für die Kalanderwalzen verwendet werden. Als besonders geeignet haben sich zum Beispiel die Metall-Keramik-Silikon-Verbundwerkstoffe PALLAS SK-B-012/5 der Fa. PALLAS OBERFLÄCHENTECHNIK GMBH, Deutschland, sowie AST 9984-B der Fa. ADVANCED SURFACE TECHNOLOGIES, Deutschland, erwiesen.

Bei der Beschichtung können, insbesondere bei Einsatz der Mehrwalzenkalander, Beschichtungsgeschwindigkeiten bis 300 m/min verwirklicht werden.

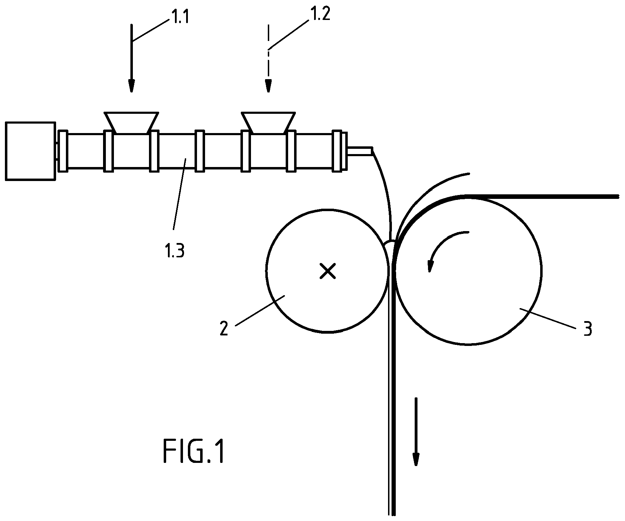

In Fig. 1 der vorliegenden Schrift ist beispielhaft der Compoundierungs- und Beschichtungsprozess anhand eines kontinuierlichen Ablaufs dargestellt. Die Polymere werden an der ersten Eingabestelle 1.1 in den Compounder 1.3, hier beispielsweise ein Extruder, gegeben. Entweder erfolgt die Eingabe bereits in der Schmelze, oder die Polymere werden im Compounder bis zur Schmelze erhitzt. Vorteilhaft werden an der ersten Eingabestelle mit dem Polymer die Organosilane entsprechend der Formel (1) in den Compounder gegeben.

Kurz vor der Beschichtung werden an einer zweiten Eingabestelle 1.2 die Beschleuniger zugesetzt. Dies hat den Erfolg, dass die Beschleuniger den Polymeren erst kurz vor der Beschichtung zugesetzt werden und die Reaktionszeit in der Schmelze gering ist.

Die Reaktionsführung kann auch diskontinuierlich erfolgen. In entsprechenden Compoundern wie beispielsweise Reaktorkesseln kann die Zugabe der Polymere, der Vernetzer und der Beschleuniger zeitversetzt und nicht, wie in der Fig. 1 dargestellt, ortsversetzt stattfinden.

Die Masse kann dann über ein Walzenauftragswerk - in Fig. 1 durch die Rakelwalze 2 und die Beschichtungswalze 3 dargestellt - auf einen Liner oder einen anderen geeigneten Träger beschichtet werden. Direkt nach der Beschichtung ist das Polymer nur leicht anvernetzt, aber noch nicht ausreichend vernetzt. Die Vernetzungsreaktion verläuft vorteilhaft auf dem Träger.

Nach der Beschichtung kühlt die Polymermasse relativ rasch aus, und zwar bis auf die Lagerungstemperatur, in der Regel auf Raumtemperatur. Das erfindungsgemäße Vernetzer-Beschleuniger-System ist bevorzugt geeignet, ohne die Zufuhr von weiterer thermischer Energie (ohne Wärmezufuhr) die Vernetzungsreaktion voranschreiten zu lassen.

Die Vernetzungsreaktion zwischen den funktionellen Gruppen des Polyacrylats und den cyclischen Ethergruppen des Vernetzers sowie zwischen den hydrolysierbaren Silylgruppen des Vernetzers und bevorzugt auch des Beschleunigers läuft bevorzugt auch ohne Wärmezufuhr bei Normalbedingungen (Raumtemperatur) vollständig ab. Da es erst zu einer Vernetzung kommt, wenn beide zuvor beschriebenen Reaktionen stattfinden, kann es von Vorteil sein, dass eine der beiden Reaktionen so schnell verläuft, dass sie teilweise oder vollständig schon im Compounder stattfindet. In der Regel ist nach einer Lagerzeit von 5 bis 14 Tagen die Vernetzung so weit abgeschlossen, dass ein funktionsfähiges Produkt, insbesondere ein Klebeband oder eine funktionsfähige Trägerschicht auf Basis des Poly(meth)acrylats, vorliegt. Der Endzustand und damit die endgültige Kohäsion des Polymers wird je nach Wahl des Polymers und des Vernetzer-Beschleuniger-Systems nach einer Lagerung von insbesondere 5 bis 14 Tagen, vorteilhaft nach 5 bis 10 Tagen Lagerungszeit bei Raumtemperatur erreicht, bei höherer Lagerungstemperatur erwartungsgemäß früher.

Durch die Vernetzung erhöht sich die Kohäsion des Polymers und damit auch die Scherfestigkeit. Die Verknüpfungen sind sehr stabil. Dies ermöglicht sehr alterungsstabile und wärmebeständige Produkte wie Klebebänder, viskoelastische Trägermaterialien oder Formkörper. Durch den Einbau des Beschleunigers in das Netzwerk lassen sich zusätzlich noch die Eigenschaften unter feucht-warmen Bedingungen verbessern.

Die physikalischen Eigenschaften des Endproduktes, insbesondere dessen Viskosität, Klebkraft und Anfassklebrigkeit, können durch den Grad der Vernetzung beeinflusst werden, so dass sich durch geeignete Wahl der Reaktionsbedingungen das Endprodukt optimieren lässt. Diverse Faktoren bestimmen das Prozessfenster des Verfahrens. Die wichtigsten Einflussgrößen sind die Mengen (Konzentrationen und Verhältnisse zueinander) und die chemische Beschaffenheit der Vernetzer sowie der Beschleuniger, die Prozess- und Beschichtungstemperatur, die Verweilzeit im Compounder (insbesondere Extruder) und im Beschichtungsaggregat, der Anteil an funktionellen Gruppen im Poly(meth)acrylat sowie das mittlere Molekulargewicht des Poly(meth)acrylats.

Im Folgenden werden einige Zusammenhänge bei der Herstellung der erfindungsgemäß vernetzten Selbstklebemasse beschrieben, die das Verfahren zur Herstellung näher charakterisieren.

Durch die Erfindung können stabil vernetzte Poly(meth)acrylate angeboten werden, und zwar mit hervorragender Steuerungsmöglichkeit bezüglich des Vernetzungsbildes durch weitgehende Entkopplung von Vernetzungsgrad und Reaktivität (Reaktionskinetik). Die zugesetzte Vernetzermenge (die Gesamtmenge der mit einer cyclischen Ethergruppe funktionalisierten Vernetzer sowie die Gesamtmenge an hydrolysierbaren Silylgruppen des Vernetzer-Beschleuniger-Systems) beeinflusst dabei weitgehend den Vernetzungsgrad des Produktes, der Beschleuniger steuert weitgehend die Reaktivität.

Es wurde festgestellt, dass sich zusätzlich zur Gesamtmenge an hydrolysierbaren Silylgruppen im Vernetzer-Beschleuniger-System durch die Menge der mit dem Vernetzer eingebrachten cyclischen Ethergruppen der Vernetzungsgrad weitgehend unabhängig von den sonst gewählten Verfahrensparametern Temperatur und ggf. Menge an zugesetztem Beschleuniger steuern lässt.

Wie sich für die cyclischen Ethergruppen zeigt, steigt der erreichte Vernetzungsgrad mit deren steigender Konzentration, während die Reaktionskinetik nahezu unbeeinflusst bleibt.

Weiterhin wurde festgestellt, dass, selbst wenn der Beschleuniger mit ins Netzwerk eingebaut wird, die zugesetzte Menge an Beschleuniger dennoch einen direkten Einfluss auf die Vernetzungsgeschwindigkeit hat und dass die Gesamtreaktionsgeschwindigkeit des erfindungsgemäßen Vernetzer-Beschleuniger-Systems gegenüber den im Stand der Technik bekannten thermischen Vernetzersystemen deutlich höher ist. Dabei muss bevorzugt keine weitere thermische Energie (aktiv) zugeführt oder das Produkt weiter behandelt werden.

Für die Abhängigkeit der Vernetzungszeit von der Beschleunigerkonzentration bei gleich bleibender Temperatur zeigt sich, dass der Endwert des Vernetzungsgrades nahezu konstant bleibt; dieser Wert bei hohen Beschleunigerkonzentrationen aber schneller erreicht wird als bei niedrigen Beschleunigerkonzentrationen.

Zusätzlich kann die Reaktivität der Vernetzungsreaktion auch durch Variation der Temperatur beeinflusst werden, wenn dies gewünscht ist, insbesondere wenn der Vorteil der "Eigenvernetzung" während der Lagerung bei üblichen Bedingungen keine Rolle spielt. Bei gleich bleibender Vernetzer- und Beschleunigerkonzentration führt eine Erhöhung der Prozesstemperatur zu einer verringerten Viskosität, dies verbessert die Beschichtbarkeit der Masse, reduziert jedoch die Verarbeitungszeit.

Eine Erhöhung der Verarbeitungszeit erreicht man durch Verringerung der Beschleunigerkonzentration, Erniedrigung des Polymer-Molekulargewichts, Verringerung der Konzentration an funktionellen Gruppen im Polymerisat, Verwendung von weniger reaktiven Vernetzern bzw. weniger reaktiven Vernetzer-Beschleuniger-Systemen und/oder Verringerung der Prozesstemperatur.

Eine Kohäsionsverbesserung der Masse kann man auf unterschiedlichen Wegen erhalten. Man kann die Beschleunigerkonzentration erhöhen, was die Verarbeitungszeit reduziert. Ferner kann man bei gleich bleibender Beschleunigerkonzentration auch das Molekulargewicht des Polyacrylats erhöhen. Im erfindungsgemäßen Sinne ist es jedenfalls vorteilhaft, die Vernetzerkonzentration zu erhöhen.

Je nach gewünschtem Anforderungsprofil der Masse bzw. des Produktes müssen die oben genannten Parameter in geeigneter Weise angepasst werden.

Die Zusammensetzung kann für breitgefächerte Anwendungen eingesetzt werden. Nachstehend seien einige besonders vorteilhafte Einsatzgebiete beispielhaft dargestellt.

Die Zusammensetzung wird zur Herstellung der erfindungsgemäßen Haftklebmasse verwendet, insbesondere als Haftklebmasse für ein Klebeband, wobei die Acrylathaftklebmasse als ein- oder doppelseitiger Film auf einer Trägerfolie vorliegt. Besonders gut geeignet ist die Zusammensetzung, wenn ein hoher Masseauftrag in einer Schicht gefordert ist, da mit dem vorgestellten Beschichtungsverfahren ein nahezu beliebig hoher Masseauftrag von bevorzugt mehr als 100 g/m$^2$, besonders bevorzugt von mehr als 200 g/m$^2$, möglich ist, und zwar insbesondere bei homogener Vernetzung durch die Schicht hindurch. Spezifische Anwendungen sind beispielsweise technische Klebebänder, insbesondere für den Einsatz im Bauwesen, z.B. Isolierbänder, Korrosionsschutzbänder, Aluminiumklebebänder, gewebeverstärkte Folienklebebänder (Duct-Tapes), Bauspezialklebebänder, z.B. Dampfsperren, Montageklebebänder, Kabelwickelbänder; selbstklebende Folien und/oder Papieretiketten.

Die Zusammensetzung kann auch zur Herstellung einer Haftklebmasse für ein trägerloses Klebeband, ein sogenanntes Transferklebeband, verwendet werden. Auch dabei ist der nahezu beliebig hoch einstellbare Masseauftrag bei besonders homogener Vernetzung durch die Schicht hindurch besonders vorteilhaft. Bevorzugte Flächengewichte sind mehr als 10 g/m$^2$ bis 5000 g/m$^2$, besonders bevorzugt 100 g/m$^2$ bis 3000 g/m$^2$.

Die Zusammensetzung kann auch zur Herstellung einer Heißsiegelklebmasse in Transferklebebändern oder in ein- oder doppelseitigen Klebebändern verwendet werden. Auch hier kann für trägerhaltige Haftklebebänder der Träger ein aus der Zusammensetzung erhaltenes viskoelastisches Polyacrylatsystem sein.

Vorteilhaft können die vorstehend aufgeführten Klebebänder als stripfähige Klebebänder ausgestaltet werden, insbesondere derart, dass sie durch Zug im Wesentlichen in der Verklebungsebene rückstandsfrei wieder abgelöst werden können.

Die Zusammensetzung eignet sich besonders gut auch zur Herstellung von dreidimensionalen haftklebrigen oder auch nicht haftklebrigen Formkörpern. Ein besonderer Vorteil ist dabei, dass eine Schichtdickenbegrenzung des zu vernetzenden, auszuformenden Polyacrylats im Gegensatz zu UV- und ESH härtenden Massen nicht vorhanden ist. Entsprechend der Wahl der Beschichtungs- oder Ausformungsaggregate lassen sich somit beliebig geformte Gebilde herstellen, die dann unter milden Bedingungen zu gewünschter Festigkeit nachvernetzen können.

Poly(meth)acrylat-basierte Masseschichten mit einer Dicke oberhalb von 80 $\mu$m sind mit der Lösemitteltechnik schlecht herstellbar, weil Probleme wie Blasenbildung, sehr niedrige Beschichtungsgeschwindigkeit, aufwändiges Kaschieren dünner Schichten übereinander und Schwachstellen im Schichtverbund auftreten.

Dicke Haftklebschichten auf Basis der Zusammensetzung können beispielsweise ungefüllt als Reinacrylat, harzabgemischt und/oder mit organischen oder anorganischen Füllstoffen gefüllt vorliegen. Auch nach bekannten Verfahren offenzellig oder geschlossenzellig geschäumte Schichten sind möglich. Als Methode zur Schäumung ist die Schäumung über komprimierte Gase wie Stickstoff oder CO$_2$ oder die Schäumung über Blähmittel wie Hydrazine oder expandierbare Mikroballons möglich. Im Falle der Verwendung von expandierenden Mikroballons wird die Masse bzw. die ausgeformte Schicht vorteilhaft in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien zu glätten. Zur Herstellung schaumanaloger Schichten können der vernetzten oder unvernetzten Zusammensetzung auch Glashohlkugeln oder bereits expandierte polymere Mikroballons zugesetzt werden.

Insbesondere können aus der Zusammensetzung auch dicke Schichten hergestellt werden, die als Trägerschicht für beidseitig mit Haftklebmasse beschichtete Klebebänder verwendet werden können. Bevorzugt handelt es sich dabei um gefüllte und geschäumte Schichten, die als Trägerschichten für schaumartige Klebebänder genutzt werden können. Auch bei diesen Schichten ist es sinnvoll, dem Polyacrylat vor dem Zusatz des Vernetzer-Beschleuniger-Systems, des Vernetzers oder des Beschleunigers Glasvollkugeln, Glashohlkugeln oder expandierende Mikroballons zuzusetzen. Im Falle der Verwendung von expandierenden Mikroballons wird die Masse bzw. die ausgeformte Schicht in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien oder durch das Zukaschieren einer auf ein Trennmaterial beschichteten Haftklebmasse zu glätten. Zu einer derartigen geschäumten, viskoelastischen Schicht kann also mindestens einseitig eine Haftklebeschicht zukaschiert werden. Bevorzugt wird beidseitig eine Corona- oder Plasma-vorbehandelte Poly(meth)acrylatschicht zukaschiert. Es können alternativ anders vorbehandelte Klebeschichten, also Haftklebeschichten und/oder hitzeaktivierbare Schichten auf der Basis anderer Polymere als Poly(meth)acrylate zu der viskolelastischen Schicht zukaschiert werden. Geeignete Basispolymere für solche Schichten sind Naturkautschuk, Synthesekautschuke, Acrylatblockcopolymere, Styrolblockcopolymere, EVA, bestimmte Polyolefine, Polyurethane, Polyvinylether und Silikone. Bevorzugt sind jedoch Massen, die keine nennenswerten Anteile an migrierfähigen Bestandteilen haben, welche mit dem Polyacrylat so gut verträglich sich, dass sie in signifikanter Menge in die Acrylatschicht eindiffundieren und dort die Eigenschaften verändern.

Statt beidseitig eine Haftklebeschicht zu kaschieren, kann auch mindestens einseitig eine Schmelzklebeschicht oder eine thermisch aktivierbare Klebeschicht verwendet werden. Die so erhaltenen asymmetrischen Klebebänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

**Beispiele**

Messmethoden (allgemein):

Feststoffgehalt (Messmethode A1);

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert (nach FIKENTSCHER) (Messmethode A2):

Der K-Wert ist ein Maß für die durchschnittliche Molekülgröße hochpolymerer Stoffe. Zur Messung wurden einprozentige (1 g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC (Messmethode A3):

Die Angaben des gewichtsmittleren Molekulargewichtes Mw und der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung)].

Dichtebestimmung über den Masseauftrag und die Schichtdicke (Messmethode A42)

Das Raumgewicht beziehungsweise die Dichte p einer beschichteten Selbstklebemasse wird über das Verhältnis von Flächengewicht zu der jeweiligen Schichtdicke bestimmt:

$$\rho = \frac{m}{V} = \frac{MA}{d} \qquad [\rho] = \frac{[kg]}{[m^2]\cdot[m]} = \left[\frac{kg}{m^3}\right]$$

MA = Masseauftrag/Flächengewicht (ohne Linergewicht) in [kg/m$^2$]
d = Schichtdicke (ohne Linerdicke) in [m].

Bei diesem Verfahren wird die Rohdichte erhalten.
Diese Dichtebestimmung eignet sich insbesondere zur Bestimmung der Gesamtdichte fertiger, auch mehrschichtiger, Produkte.

Messmethoden (insbesondere Haftklebemassen):

180° Klebkrafttest (Messmethode H1):

Ein 20 mm breiter Streifen einer auf Polyester als Schicht aufgetragenen Acrylathaftklebmasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.

Die Messergebnisse sind in N/cm angegeben und sind gemittelt aus drei Messungen. Analog wurde die Klebkraft auf Polyethylen (PE) bestimmt.

Scherstandzeit (Messmethode H2):

Ein 13 mm breiter und 30 mm langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm x 13 mm (Länge x Breite), wobei das Klebeband die Prüfplatte am Rand um 10 mm überragte. Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigte.

Bei Raumtemperatur wurde ein Gewicht von 1 kg an dem überstehenden Ende des Klebebandes befestigt. Die Messung wurde bei Normalklima (23 °C, 55 % Luftfeuchtigkeit) und bei 70 °C in einem Wärmeschrank durchgeführt.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wurde auf eine mit Aceton gereinigte Stahl-Prüfplatte verklebt, so dass die Stahlplatte das Klebeband rechts und links überragte und das Klebeband die Prüfplatte am oberen Rand um 2 mm überragte. Die Verklebungsfläche der Probe betrug Höhe x Breite = 13mm x 10mm. Die Verklebungsstelle wurde anschließend mit einer 2 kg-Stahlrolle und einer Geschwindigkeit von 10 m/min sechsmal überrollt. Das Klebeband wurde bündig mit einem stabilen Klebestreifen verstärkt, der als Auflage für den Wegmessfühler diente. Die Probe wurde mittels der Prüfplatte senkrecht aufgehängt.

*Mikroschertest:*

Das zu messende Probenmuster wurde am unteren Ende mit einem Gewicht von 100 g belastet. Die Prüftemperatur betrug 40 °C, die Prüfdauer 30 Minuten (15 Minuten Belastung und 15 Minuten Entlastung). Die Scherstrecke nach der vorgegebenen Testdauer bei konstanter Temperatur ist als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgte eine Rückbewegung durch Relaxation]. Angegeben ist ebenfalls der elastische Anteil in Prozent ["elast"; elastischer Anteil = (max - min) x 100 / max].

Feucht-Wärme-Beständigkeit (Messmethode_H4):

Die jeweilige Klebemasse wurde beidseitig mit einer Schichtdicke von 50 $\mu$m auf eine 23 $\mu$m dicke, geätzte PET-Folie beschichtet; nach 24 Stunden Lagerung bei Raumtemperatur wurde ein Prüfmuster mit den Maßen 25 mm x 25 mm ausgestanzt.

Der Prüfuntergrund sowie ein 42,2 g schwerer Alumiuniumwürfel wurden mit Aceton gereinigt, und der Klebmasseverbund wurde nach Abdampfen des Lösungsmittels zunächst blasenfrei auf dem Aluminiumwürfel und im Anschluss auf den Prüfuntergrund verklebt. Der Verbund wurde für eine Minute mit einem 5 kg schweren Gewicht belastet und für 24 Stunden bei Raumtempertur gelagert. Der Prüfuntergrund wurde in einem Winkel von 90° (also senkrecht) gelagert, die obere Kante des Würfels markiert und in einem Klimaschrank bei 85 °C und 85% rel. Luftfeuchte aufbewahrt. Nach 48 Stunden wurde die Scherstrecke des Würfels bestimmt, wobei die Strecke in cm angegeben ist.

Sollte der Würfel sich abgelöst haben, ist die Zeit bis zum Versagen der Klebeverbindung angegeben.

Messmethoden (insbesondere Dreischichtenaufbauten):

90° Klebkraft Stahl - offene und abgedeckte Seite (Messmethode V1):

Die Bestimmung der Klebkraft Stahl erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wurde vor der Messung gereinigt und konditioniert. Dazu wurde die Platte zunächst mit Aceton abgewischt und danach 5 Minuten an der Luft liegen gelassen, damit das Lösungsmittel abdampfen konnte. Die dem Prüfuntergrund abgewandte Seite des Dreischichtverbundes wurde dann mit einer 50 μm-Aluminiumfolie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 2 kg Rolle fünfmal hin und her, bei einer Aufrollgeschwindigkeit von 10 m/min, überrollt. Unmittelbar nach dem Anrollen wurde die Stahlplatte in eine spezielle Halterung geschoben, die es ermöglicht, das Muster in einem Winkel von 90° senkrecht nach oben abzuziehen. Die Klebkraftmessung erfolgte mit einer Zwick-Zugprüfmaschine. Beim Applizieren der abgedeckten Seite auf die Stahlplatte wurde die offene Seite des Dreischichtverbundes zunächst gegen die 50 μm-Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Scherstandzeit - offene und abgedeckte Seite (Messmethode V2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche betrug 20 mm x 13 mm (Länge x Breite). Vor der Messung wurde die Stahlplatte gereinigt und konditioniert. Dazu wurde die Platte zunächst mit Aceton abgewischt und danach 5 Minuten an der Luft liegen gelassen, damit das Lösungsmittel abdampfen konnte. Nach dem Verkleben wurde die offene Seite mit einer 50 μm Aluminiumfolie verstärkt und mit einer 2 kg Rolle zweimal hin und her überrollt.

Anschließend wurde eine Gurtschlaufe am überstehenden Ende des Dreischichtverbundes angebracht. Das Ganze wurde dann an einer geeigneten Vorrichtung aufgehängt und mit 10 N belastet. Die Aufhängvorrichtung war so beschaffen, dass das Gewicht die Probe in einem Winkel von 179° +/- 1° belastet. Dadurch wurde sichergestellt, dass sich der Dreischichtverbund nicht von der Plattenunterkante abschälen konnte. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wurde die offene Seite zunächst mit der 50 μm Aluminiumfolie verstärkt, das Trennmaterial entfernt und auf die Prüfplatte analog der Beschreibung geklebt. Die Messung wurde bei Normalklima (23 °C, 55 % Luftfeuchtigkeit) durchgeführt.

Dynamische Scherfestigkeit (Messmethode V3):

Ein quadratisches Transferklebeband mit einer Kantenlänge von 25 mm wurde zwischen zwei Stahlplatten überlappend verklebt und 1 Minute lang mit 0,9 kN angedrückt (Kraft P). Nach einer Lagerung von 24 h wurde der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen wurden. Die Maximalkraft ist in N/cm$^2$ angegeben.

Kommerziell erhältliche, eingesetzte Chemikalien

| Chemische Verbindung | Handelsname | Hersteller | CAS-Nr. |
|---|---|---|---|
| Bis-(4-*tert*-butylcyclohexyl)peroxydicarbonat | Perkadox® 16 | Akzo Nobel | 15520-11-3 |
| 2,2'-Azobis(2-methylpropionitril), AIBN | Vazo® 64 | DuPont | 78-67-1 |
| Klebharz auf Terpen-Phenolbasis (Erweichungspunkt 110 °C, Hydroxylwert 45-60) | Dertophene® T11 0 | DRT, Frankreich | 73597-48-5 |
| (3-Glycidyloxypropyl)trimethoxysilan | Dynasylan® GLYMO | Evonik | 2530-83-8 |
| (3-Glycidyloxypropyl)triethoxysilan | Dynasylan® GLYEO | Evonik | 2602-34-8 |
| (3-Glycidoxypropyl)methyldiethoxy-silan | KBE-402 | Shinetsu Silicone, Japan | 2897-60-1 |
| 2-(3,4-Epoxycyclohexyl)ethyl]-trimethoxysilan | - | Sigma-Aldrich | 3388-04-3 |

(fortgesetzt)

| Chemische Verbindung | Handelsname | Hersteller | CAS-Nr. |
|---|---|---|---|
| Triethoxy[3-[(3-ethyl-3-oxetanyl)-methoxy]propyl]silan | Aron Oxetane OXT-610 | Toagosei Co., Ltd., Japan | 220520-33-2 |
| 3-Aminopropyltriethoxysilan | Dynasylan® AMEO | Evonik | 919-30-2 |
| Pentaerythrittetraglycidether | D.E.R.™ 749 | Dow Chem Corp., USA | 3126-63-4 |
| Isophorondiamin | Vestamin® IPD | Evonik | 2855-13-2 |
| 3,4-Epoxycyclohexylmethyl-3,4-epoxycyclohexancarboxylat | Uvacure® 1500 | Cytec Industries Inc. | 2386-87-0 |
| Resorcinol bis(diphenyl Phosphat) | Reofos® RDP | Chemtura | 57583-54-7 |
| Thermoplastische Mikrohohlkugeln (Partikelgröße 10 - 17 $\mu$m; Dichte max. 0,017 g/cm$^3$; Expansionstemperatur 127 - 139 °C [Start]; 164 - 184 °C [max. Exp.]) | Expancel® 092 DU 40 | Akzo Nobel | |
| alle Spezifikationsangaben bei 20 °C; | | | |

Beispiele

Herstellung der Ausgangspolymere P1 bis P3

Im Folgenden wird die Präparation der Ausgangspolymere beschrieben. Die untersuchten Polymere wurden konventionell über eine freie radikalische Polymerisation in Lösung hergestellt.

Basispolymer P1

Ein für radikalische Polymerisationen konventioneller 300 L Reaktor wurde mit 30 kg EHA, 67 kg BA, 3 kg Acrylsäure und 66 kg Aceton/Isopropanol (96:4) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h wurden erneut 50 g Vazo® 67 zugegeben und nach 4 h wurde mit 20 kg Aceton/Isopropanol-Gemisch (96:4) verdünnt. Nach 5 sowie nach 7 h wurde jeweils mit 150 g Perkadox® 16 nachinitiiert und mit 23 kg Aceton/Isopropanol-Gemisch (96:4) verdünnt. Die Reaktion wurde nach 24 h Reaktionszeit abgebrochen und auf Raumtemperatur abgekühlt. Das Polyacrylat hat einen K-Wert von 75,1, einen Feststoffgehalt von 50,2 % und mittlere Molekulargewichte gemessen mittels GPC von $M_n$ = 91.900 g/mol und $M_w$ = 1.480.000 g/mol.

Basispolymer (P2):

Ein für radikalische Polymerisationen konventioneller 300 L-Reaktor wurde mit 11,0 kg Acrylsäure, 27,0 kg Butylacrylat (BA), 62,0 kg 2-Propylheptylacrylat sowie 72,4 kg Aceton/ Isopropanol (94:6) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Das Polyacrylat hat einen K-Wert von 50,3, einen Feststoffgehalt von 50,1 % und mittlere Molekulargewichte gemessen mittels GPC von $M_n$ = 25.000 g/mol und $M_w$ = 1.010.000 g/mol.

Das Basispolymer wurde in den Beispielen B8 - B10 sowie VB11 und VB12 auch als äußere Haftklebmasseschicht für dreischichtige, geschäumte Haftklebebänder verwendet. Hierzu wurde das Polyacrylat in Lösung mit 0,2 Gew-% des Vernetzers Uvacure® 1500 abgemischt, auf einen Feststoffgehalt von 30 % mit Aceton verdünnt und dann auf eine silikonisierte Trennfolie (50 $\mu$m Polyester) bzw. auf eine 23 $\mu$m dicke, geätzte PET-Folie beschichtet (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug 50 g/m$^2$.

Basispolymer P3

Ein für radikalische Polymerisationen konventioneller 300 L-Reaktor wurde mit 7,0 kg Acrylsäure, 25,0 kg Methylacrylat, 68,0 kg 2-Ethylhexylacrylat sowie 66,0 kg Aceton/ Isopropanol (96:4) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 25 kg Aceton/ Isopropanol (96:4) und nach 6 h mit 10,0 kg Aceton/ Isopropanol (96:4) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Das Polyacrylat hat einen K-Wert von 51,0, einen Feststoffgehalt von 50,2 % und mittlere Molekulargewichte gemessen mittels GPC von $M_n$ = 74.700 g/mol und $M_w$ = 657.000 g/mol.

Herstellung der Haftklebmassen- bzw. viskoelastischen, geschäumten Trägerbeispiele B1 - B10 sowie der Vergleichsbeispiele VB11 und VB12

Verfahren 1: Aufkonzentration / Herstellung der Schmejzhaftkleber

Das Basispolymer P wurde mittels Einschneckenextruder (Aufkonzentrationsextruder, Berstorff GmbH, Deutschland) weitestgehend vom Lösemittel befreit (Restlösemittelgehalt ≤ 0,3 Gew.-%). Die Parameter der Aufkonzentration des Basispolymers waren wie folgt: Die Drehzahl der Schnecke betrug 150 U/min, der Motorstrom 15 A, und es wurde ein Durchsatz von 58,0 kg/h flüssig realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts P lag bei ca. 115 °C. Der Feststoffgehalt betrug nach diesem Aufkonzentrationsschritt 99,8%.

Verfahren 2: Herstellung der erfindungsgemäßen Klebbebäder, Abmischung mit dem Vernetzer-Beschleuniger-System für die thermische Vernetzung und Beschichtung

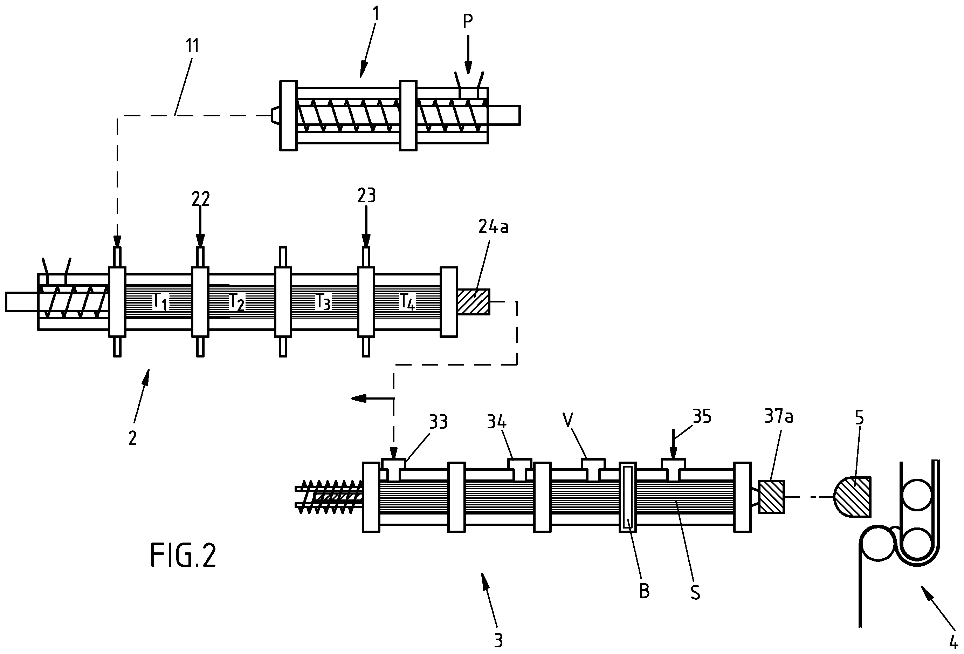

Die Verarbeitung und optionale Schäumung fanden in einer Versuchsanlage statt, die der Darstellung in Fig. 2 entspricht.
Das Basispolymer P wurde gemäß Verfahren 1 in einem Fütterextruder 1 aufgeschmolzen und mit diesem als Polymerschmelze über einen beheizbaren Schlauch 11 in einen Planetwalzenextruder 2 (PWE) gefördert (es wurde insbesondere ein PWE mit vier unabhängig voneinander heizbaren Modulen T1, T2, T3, T4 eingesetzt). Über die Dosieröffnung 22 bestand die Möglichkeit, zusätzliche Additive oder Füllstoffe wie z.B. Farbpasten zuzuführen. An Punkt 23 wurde der Vernetzer hinzugefügt. Alle Komponenten wurden zu einer homogenen Polymerschmelze gemischt.
Mittels einer Schmelzepumpe 24a wurde die Polymerschmelze in einen Doppelschneckenextruder 3 überführt (Eingabeposition 33). An Position 34 wurde die Beschleunigerkomponente hinzugefügt. Anschließend wurde die gesamte Mischung in einem Vakuumdom V bei einem Druck von 175 mbar von allen Gaseinschlüssen befreit (Kriterium für Gasfreiheit siehe oben). Im Anschluss an die Vakuumzone befand sich auf der Schnecke ein Blister B, welcher einen Druckaufbau in dem darauf folgenden Segment S ermöglichte. Im Falle von geschäumten Produkten wurde durch geeignete Steuerung der Extruderdrehzahl und der Schmelzepumpe 37a in dem Segment S zwischen Blister B und Schmelzepumpe 37a ein Druck von größer 8 bar aufgebaut, an der Dosierstelle 35 eine Mikroballonmischung (Mikroballons eingebettet in das Dispergierhilfsmittel Reofos® RDP) hinzugefügt und mittels eines Mischelements homogen in die Vormischung eingearbeitet. Die entstandene Schmelzmischung wurde in eine Düse 5 überführt.
Nach Verlassen der Düse 5, also nach Druckabfall, expandierten die optional eingearbeiteten Mikroballons, wobei durch den Druckabfall eine scherungsarme Abkühlung der Polymermasse erfolgte und eine geschäumte Haftklebemasse entstand.
Im Falle eines ein- oder doppelseitigen Klebebandes wurde das Polymer je nach Produktaufbau auf eine Folie, ein Vlies oder einen Schaum beschichtet. Die Bahngeschwindigkeit bei Durchlaufen der Beschichtungsanlage betrug 100 m/min.
Im Falle des Transferklebebandes oder der viskoelstischen Trägerschichten für mehrschichtige Klebebänder wurden sowohl das ungeschäumte als auch das geschäumte Polymer anschließend zwischen zwei Trennmaterialien, welche erneut nach dem Entfernen wiederverwendet werden konnten (Prozessliner), beschichtet und mittels eines Walzenkalanders 4 bahnförmig ausgeformt.
Um die Verankerung der Haftklebemasse P2 (aus Lösung beschichtet und mit Uvacure 1500 vernetzt) aus den Beispielen B8 - B10 sowie VB11 und VB12 auf dem ausgeformten, Polyacrylat(schaum) zu verbessern, wurden sowohl die Haftklebmassen als auch das Polymer bzw. der Polymerschaum mittels Corona vorbehandelt (Corona-Anlage der Firma VITAPHONE, Dänemark, 70 W·min/m$^2$). Diese Behandlung führte nach der Herstellung des Dreischichtverbundes zu einer verbesserten chemischen Anbindung an die Polyacrylat(schaum)trägerschicht.

Die Bahngeschwindigkeit bei Durchlaufen der Beschichtungsanlage betrug 30 m/min. Nach Verlassen des Walzenspaltes wurde ggf. ein anti-adhäsiver Träger ausgedeckt und das fertige Dreischichtprodukt mit dem verbleibenden zweiten anti-adhäsiven Träger aufgewickelt.

Die in Tabelle 1 aufgeführten Beispiele B1 bis B10 sowie die Vergleichsbeispiele VB11 bis VB13 wurden gemäß Verfahren 1 und 2 hergestellt. Bei den Beispielen B1 bis B7 und VB11 bis VB13 wurden doppelseitige Haftklebebänder hergestellt, wobei die Hafklebmassen auf eine 23 μm dicke, geätzte PET-Folie beschichtet wurden. Beispiele B8 und B9 sind geschäumte Transferklebebänder und Beispiel B10 sowie VB14 geschäumte viskoelastische Träger für Montageklebebänder, die noch zusätzlich beidseitig mit einer Haftklebemasse beschichtet wurden.

**Tabelle 1**: Beispiele B1 - B10 sowie Vergleichsbeispiele VB11 - VB14 - Rezepturen

| Bsp. | Polymer | Vernetzer [Gew.-%][a] | Beschleuniger [Gew-%][a] | Harz DT110 [Gew-%] | Mikroballons [Gew-%] | Schichtdicke [μm][c] |
|---|---|---|---|---|---|---|
| B1 | P1 | GLYEO; 0,14 | AMEO; 0,50 | 32 | - | 100 |
| B2 | P1 | GLYEO; 0,20 | AMEO: 0,40 | 32 | - | 100 |
| B3 | P1 | GLYMO; 0,13 | AMEO; 0,50 | 32 | - | 100 |
| B4 | P1 | [b]; 0,20 | AMEO; 0,50 | 32 | - | 100 |
| B5 | P1 | OXT-610; 0,18 | AMEO; 0,40 | 32 | - | 100 |
| B6 | P1 | OXT-610; 0,18 | AMEO; 0,80 | 32 | - | 100 |
| B7 | P2 | GLYEO; 0,10 | AMEO; 0,30 | - | - | 100 |
| B8 | P3 | GLYEO; 0,20 | AMEO; 0,30 | - | 2 | 1000 |
| B9 | P3 | GLYEO; 0,30 | AMEO; 0,30 | - | 2 | 1000 |
| B10 | P1 | GLYEO; 0,25 | AMEO; 0,30 | - | 1,5 | 900 |
| VB11 | P1 | GLYEO; 0,14 | - | 32 | - | 100 |
| VB12 | P1 | - | AMEO; 0,50 | 32 | - | 100 |
| VB13 | P1 | D.E.R. 749, 0,12 | Vestamin IPD, 0,80 | 32 | - | 100 |
| VB14 | P1 | D.E.R. 749, 0,14 | Vestamin IPD, 0,14 | - | 1,5 | 900 |
| [a] Die Konzentrationsangabe des Vernetzers sowie des Beschleunigers bezieht sich nur auf das Basispolymer. Die Komponenten wurden additiv zu dem Polymer gegeben und nicht bei der Berechnung von Harz- und ggf. Mikroballonmengen berücksichtigt. <br> [b] 2-(3,4-Epoxycyclohexyl)ethyl]trimethoxysilan <br> [c] Die 100 μm dicken Muster wurden auf beide Seiten einer 23 μm dicken geätzten PET-Folie beschichtet. | | | | | | |

Die Dichte der geschäumten Muster B8 - B10 sowie VB14 beträgt 749 kg/m$^3$ und wurde mittels Messmethode A4 bestimmt.

Die Bestimmung der Reaktionsgeschwindigkeit der Vernetzung erfolgte mittels Messung des elastischen Anteils (Messmethode H3), wobei dabei angenommen wurde, dass die Vernetzung abgeschlossen ist, sobald keine signifikante Änderung der Messergebnisse mehr erkennbar war.

**Tabelle 2**: Beispiele B1 - B10 sowie Vergleichsbeispiele VB11 - VB14 - Zeitlicher Verlauf des elastischen Anteils in % zur Bestimmung der Kinetik der Vernetzungsreaktion

| Bsp. | 7d | 10d | 14d | 28d | 42d | 66d |
|---|---|---|---|---|---|---|
| B1 | 40 | 58 | 62 | 66 | 65 | 66 |
| B2 | 40 | 57 | 68 | 70 | 69 | 70 |

(fortgesetzt)

| Bsp. | 7d | 10d | 14d | 28d | 42d | 66d |
|---|---|---|---|---|---|---|
| B3 | 45 | 61 | 65 | 66 | 67 | 66 |
| B4 | 38 | 58 | 60 | 59 | 60 | 60 |
| B5 | 20 | 58 | 62 | 63 | 61 | 62 |
| B6 | 40 | 61 | 61 | 63 | 62 | 61 |
| B7 | 56 | 78 | 85 | 86 | 85 | 85 |
| B8 | 42 | 56 | 60 | 61 | 60 | 62 |
| B9 | 49 | 66 | 72 | 72 | 71 | 73 |
| B10 | 22 | 36 | 58 | 65 | 65 | 66 |
| VB11 | n.b. | n.b. | n.b. | n.b. | 10 | 18 |
| VB12 | n.b. | n.b. | n.b. | n.b. | n.b. | n.b. |
| VB13 | n.b. | n.b. | 2 | 33 | 65 | 65 |
| VB14 | n.b | n.b. | 5 | 42 | 64 | 66 |
| n.b.: Der elastische Anteil konnte nicht bestimmt werden, da die Muster während der in der Messmethode H3 angegebenen Zeit abgefallen sind. | | | | | | |

Der Vergleich des Vergleichsbeispiels VB13 mit den Beispielen B1 - B6 zeigt, dass alle Vernetzer-Beschleuniger-Kombinationen zu einem vergleichbaren elastischen Anteil führen. Jedoch ergibt sich bei VB13 erst nach 14 Tagen ein messbarer elastischer Anteil, wohingegen die Vernetzung der erfinderischen Beispiele nach 14 Tagen und zum Teil schon nach 10 Tagen vollständig abgeschlossen ist. Ein ähnliches Ergebnis ergibt sich beim Vergleich von B10 mit VB14. Auch die Beispiele mit einem erhöhten Acrylsäureanteil (Basispolymere P2 und P3) zeigen, dass die erfindungsgemäßen Vernetzer-Beschleuniger-Systeme noch gut im Extruder verarbeitbar sind und dass die Vernetzung schon nach kurzer Zeit abgeschlossen ist. Weiterhin ist zu erkennen, dass die Verwendung von Methoxysilan- (B3) anstelle von Ethoxysilan-basierten Vernetzern (B1 und B2) noch zu einer weiteren Reaktionsgeschwindigkeitssteigerung führt. Wird auf die Verwendung des Beschleunigers verzichtet (VB11), so zeigt sich, dass die Vernetzungsgeschwindigkeit zu langsam ist. In VB12 wird nur der Beschleuniger, aber kein Vernetzer eingesetzt, was zu einem komplett unvernetzten Polymer führt. Aufgrund dieser Ergebnisse wurden VB11 und VB12 nicht weiter bewertet.

Klebtechnische Bewertung der doppelseitigen Haftklebebänderbeispiele B1 - B7 sowie VB13

Anhand der folgenden Beispiele ist zu erkennen, dass sowohl die erfindungsgemäßen Vernetzer als auch das Vernetzer-Beschleuniger-System des Vergleichsbeispiels zu ähnlichen klebtechnischen Eigenschaften führen. Jedoch zeigen die erfindungsgemäßen Beispiele neben einer deutlich schnelleren Vernetzung auch eine deutlich bessere Feucht-Wärme-Beständigkeit auf unterschiedlichen Materialien.

**Tabelle 3**: Beispiele B1 - B7 sowie Vergleichsbeispiel VB13 - Klebtechnische Daten der Haftklebemassen

| Bsp. | Klebkraft Stahl [N/cm] | Klebkraft PE [N/cm] | SSZ, 10 N, 23°C [Min] | SSZ, 10 N, 70°C [Min] | MSW max [μm] | elast. Anteil [%] | Feucht-Wärme PC [cm] | Feucht-Wärme Glas [cm] |
|---|---|---|---|---|---|---|---|---|
| B1 | 10,6 | 4,5 | 5.400 | 980 | 360 | 66 | 0,1 | 0,1 |
| B2 | 9,9 | 4,2 | > 10.000 | 1.800 | 220 | 70 | 0,1 | 0,1 |
| B3 | 10,5 | 4,5 | 5.600 | 1.000 | 355 | 66 | < 0,1 | < 0,1 |
| B4 | 10,6 | 5,0 | > 10.000 | 2.200 | 240 | 60 | 0,1 | 0,2 |
| B5 | 10,2 | 4,4 | 6.000 | 800 | 380 | 62 | 0,2 | 0,2 |
| B6 | 10,3 | 4,8 | 6.400 | 900 | 350 | 61 | 0,1 | 0,1 |
| B7 | 10,0 | 1,2 | > 10.000 | > 10.000 | 180 | 85 | < 0,1 | < 0,1 |

(fortgesetzt)

| Bsp. | Klebkraft Stahl [N/cm] | Klebkraft PE [N/cm] | SSZ, 10 N, 23°C [Min] | SSZ, 10 N, 70°C [Min] | MSW max [μm] | elast. Anteil [%] | Feucht-Wärme PC [cm] | Feucht-Wärme Glas [cm] |
|---|---|---|---|---|---|---|---|---|
| VB13 | 11,0 | 4,8 | 9.150 | 1.200 | 350 | 65 | n.b (24 h) | n.b (3 h) |
| Klebkraft Stahl und PE = Messmethode H1, SSZ = Scherstandszeiten 23° und 70°C = Messmethode H2, MSW = Mikroschertest = Messmethode H3, elast. Anteil = elastischer Anteil, Feucht-Wärme = Messmethode H4, n.b. = nicht bestanden | | | | | | | | |

Des Weiteren ist zu erkennen, dass eine Erhöhung der Vernetzerkonzentration eine höhere Kohäsion zur Folge hat (Vergleich Beispiele B1 und B2) und dass die Erhöhung der Beschleunigermenge bei gleich bleibender Vernetzerkonzentration zu gleichen Klebeigenschaften, aber einer deutlichen Beschleunigung der Vernetzung führt (Vergleich Beispiele B5 und B6).

Klebtechnische Bewertung der viskoelastischen Träger B8 und B9 sowie der Dreischichtaufbauten B10 und VB14

Auch in diesen Beispielen zeigt sich, dass sowohl die erfindungsgemäßen Vernetzer als auch das Vernetzer-Beschleuniger-System des Vergleichsbeispiels zu ähnlichen klebtechnischen Eigenschaften führen, aber die erfindungsgemäßen Beispiele neben einer deutlich schnelleren Vernetzung eine deutlich bessere Feucht-Wärme-Beständigkeit auf unterschiedlichen Materialien zeigen.

**Tabelle 4:** Beispiele B8 - B10 sowie Vergleichsbeispiel VB12 - Klebtechnische Daten der viskoelastischen Träger sowie der Dreischichtaufbauten

| Bsp. | Äußere PSA-Schicht | Klebkraft Stahl [N/cm] | Klebkraft PE [N/cm] | SSZ, 10 N, 23°C [Min] | SSZ, 10 N, 70°C [Min] | Feucht-Wärme PC [cm] | Feucht-Wärme Glas [cm] | Dyn. Scher [N/cm$^2$] |
|---|---|---|---|---|---|---|---|---|
| B1 | - | 45 f.s. | 18 | > 10.000 | 1.200 | 0,1 | 0,1 | 120 |
| B2 | - | 45 f.s. | 16 | > 10.000 | 2.400 | 0,1 | 0,1 | 130 |
| B3 | P2[a)] | 50 f.s. | 28 | > 10.000 | 6.800 | < 0,1 | < 0,1 | 90 |
| VB14 | P2[a)] | 50 f.s. | 29 | > 10.000 | 6.900 | 0,3 | 1,5 | 100 |
| [a)] Vernetzt mit 0,2 % Uvacure 1500 und aus Lösung beschichtet. Klebkraft Stahl und PE = Messmethode V1, f.s. = foam split (Schaumspalten) SSZ = Scherstandszeiten 23° und 70°C = Messmethode V2, Feucht-Wärme = Messmethode H4, dynamische Scherfestigkeit = Messmethode V3 | | | | | | | | |

**Patentansprüche**

**1.** Haftklebmasse, erhältlich durch thermische Vernetzung einer Zusammensetzung zur Herstellung einer Haftklebmasse, enthaltend

a) mindestens ein vernetzbares Poly(meth)acrylat;
b) mindestens ein Organosilan entsprechend der Formel (1)

$$R^1\text{-}Si(OR^2)_nR^3_m \qquad (1),$$

worin $R^1$ für einen eine cyclische Etherfunktion enthaltenden Rest,
die Reste $R^2$ unabhängig voneinander jeweils für einen Alkyl- oder Acylrest,
$R^3$ für eine Hydroxygruppe oder einen Alkylrest,
$n$ für 2 oder 3 und $m$ für die sich aus 3 - n ergebende Zahl stehen; und

c) mindestens eine die Reaktion des vernetzbaren Poly(meth)acrylats mit den cyclischen Etherfunktionen beschleunigende Substanz,

**dadurch gekennzeichnet, dass** die die Reaktion des vernetzbaren Poly(meth)acrylats mit den cyclischen Etherfunktionen beschleunigende Substanz ein mindestens eine Aminogruppe und mindestens eine Alkoxy- oder Acyloxygruppe enthaltendes Organosilan ist.

2. Haftklebmasse gemäß Anspruch 1, **dadurch gekennzeichnet, dass** das Poly(meth)acrylat Hydroxy- und/oder Carbonsäuregruppen enthält.

3. Hafklebmasse gemäß mindestens einem der Ansprüche 1 und 2, **dadurch gekennzeichnet, dass** $R^1$ eine Epoxid- oder Oxetangruppe enthält.

4. Haftklebmasse gemäß mindestens einem der vorstehenden Ansprüche, **dadurch gekennzeichnet, dass** $R^1$ eine Glycidyloxy-, 3-Oxetanylmethoxy- oder Epoxycyclohexylgruppe enthält.

5. Haftklebmasse gemäß mindestens einem der vorstehenden Ansprüche, **dadurch gekennzeichnet, dass** die Reste $R^2$ unabhängig voneinander jeweils für eine Alkylgruppe stehen.

6. Haftklebmasse gemäß mindestens einem der vorstehenden Ansprüche, **dadurch gekennzeichnet, dass** die Reste $R^2$ unabhängig voneinander jeweils für eine Methyl- oder Ethylgruppe stehen.

7. Haftklebmasse gemäß mindestens einem der vorstehenden Ansprüche, **dadurch gekennzeichnet, dass** $R^3$ für eine Methylgruppe steht.

8. Haftklebmasse gemäß mindestens einem der vorstehenden Ansprüche, **dadurch gekennzeichnet, dass** die Zusammensetzung Organosilane entsprechend der Formel (1) zu insgesamt 0,05 bis 0,5 Gew.-%, bezogen auf das Gesamtgewicht der Zusammensetzung, enthält.

9. Haftklebmasse gemäß mindestens einem der vorstehenden Ansprüche, **dadurch gekennzeichnet, dass** die Zusammensetzung die Reaktion des vernetzbaren Poly(meth)acrylats mit den cyclischen Etherfunktionen beschleunigende Substanzen zu insgesamt 0,05 bis 1,0 Gew.-%, bezogen auf das Gesamtgewicht der Zusammensetzung, enthält.

**Claims**

1. Pressure-sensitive adhesive obtainable by thermally crosslinking a composition for preparing a pressure-sensitive adhesive, comprising

   a) at least one crosslinkable poly(meth)acrylate;
   b) at least one organosilane conforming to the formula (1)

   $$R^1\text{-Si}(OR^2)_n R^3_m \qquad (1),$$

   in which $R^1$ is a radical containing a cyclic ether function,
   the radicals $R^2$ independently of one another are each an alkyl or acyl radical,
   $R^3$ is a hydroxyl group or an alkyl radical,
   n is 2 or 3 and m is the number resulting from 3 - n; and

   c) at least one substance accelerating the reaction of the crosslinkable poly(meth)acrylate with the cyclic ether functions,

   **characterized in that** the substance accelerating the reaction of the crosslinkable poly(meth)acrylate with the cyclic ether functions is an organosilane containing at least one amino group and at least one alkoxy or acyloxy group.

2. Pressure-sensitive adhesive according to Claim 1, **characterized in that** the poly(meth)acrylate contains hydroxyl and/or carboxylic acid groups.

3. Pressure-sensitive adhesive according to at least one of Claims 1 and 2, **characterized in that** $R^1$ contains an

epoxide group or oxetane group.

4.  Pressure-sensitive adhesive according to at least one of the preceding claims, **characterized in that** $R^1$ contains a glycidyloxy, 3-oxetanylmethoxy or epoxycyclohexyl group.

5.  Pressure-sensitive adhesive according to at least one of the preceding claims, **characterized in that** the radicals $R^2$ independently of one another are each an alkyl group.

6.  Pressure-sensitive adhesive according to at least one of the preceding claims, **characterized in that** the radicals $R^2$ independently of one another are each a methyl or ethyl group.

7.  Pressure-sensitive adhesive according to at least one of the preceding claims, **characterized in that** $R^3$ is a methyl group.

8.  Pressure-sensitive adhesive according to at least one of the preceding claims, **characterized in that** the composition comprises organosilanes conforming to the formula (1) at in total 0.05 to 0.5 wt%, based on the total weight of the composition.

9.  Pressure-sensitive adhesive according to at least one of the preceding claims, **characterized in that** the composition comprises substances accelerating the reaction of the crosslinkable poly(meth)acrylate with the cyclic ether functions at in total 0.05 to 1.0 wt%, based on the total weight of the composition.


**Revendications**

1.  Masse adhésive sensible à la pression, pouvant être obtenue par réticulation thermique d'une composition pour la fabrication d'une masse adhésive sensible à la pression, contenant :

    a) au moins un poly(méth)acrylate réticulable ;
    b) au moins un organosilane correspondant à la formule (1) :

$$R^1\text{-}Si(OR^2)_n R^3_m \qquad (1)$$

    dans laquelle $R^1$ représente un radical contenant une fonction éther cyclique,
    les radicaux $R^2$ représentent chacun indépendamment les uns des autres un radical alkyle ou acyle,
    $R^3$ représente un groupe hydroxy ou un radical alkyle,
    n représente 2 ou 3, et m représente le nombre donné par 3-n ; et

    c) au moins une substance accélérant la réaction du poly(méth)acrylate réticulable avec les fonctions éther cycliques,

    **caractérisée en ce que** la substance accélérant la réaction du poly(méth)acrylate réticulable avec les fonctions éther cycliques est un organosilane contenant au moins un groupe amino et au moins un groupe alcoxy ou acyloxy.

2.  Masse adhésive sensible à la pression selon la revendication 1, **caractérisée en ce que** le poly(méth)acrylate contient des groupes hydroxy et/ou acide carboxylique.

3.  Masse adhésive sensible à la pression selon au moins l'une quelconque des revendications 1 et 2, **caractérisée en ce que** $R^1$ contient un groupe époxyde ou oxétane.

4.  Masse adhésive sensible à la pression selon au moins l'une quelconque des revendications précédentes, **caractérisée en ce que** $R^1$ contient un groupe glycidyloxy, 3-oxétanylméthoxy ou époxycyclohexyle.

5.  Masse adhésive sensible à la pression selon au moins l'une quelconque des revendications précédentes, **caractérisée en ce que** les radicaux $R^2$ représentent chacun indépendamment les uns des autres un groupe alkyle.

6.  Masse adhésive sensible à la pression selon au moins l'une quelconque des revendications précédentes, **carac-**

**térisée en ce que** les radicaux $R^2$ représentent chacun indépendamment les uns des autres un groupe méthyle ou éthyle.

7. Masse adhésive sensible à la pression selon au moins l'une quelconque des revendications précédentes, **caractérisée en ce que** $R^3$ représente un groupe méthyle.

8. Masse adhésive sensible à la pression selon au moins l'une quelconque des revendications précédentes, **caractérisée en ce que** la composition contient des organosilanes correspondant à la formule (1) au total à hauteur de 0,05 à 0,5 % en poids, par rapport au poids total de la composition.

9. Masse adhésive sensible à la pression selon au moins l'une quelconque des revendications précédentes, **caractérisée en ce que** la composition contient des substances accélérant la réaction du poly(méth)acrylate réticulable avec les fonctions éther cycliques au total à hauteur de 0,05 à 1,0 % en poids, par rapport au poids total de la composition.

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004044086 A1
- EP 1317499 A
- EP 1978069 A1
- EP 2186869 A1
- US 20120328873 A
- EP 2192148 A1
- WO 2008116033 A1
- US 20070219285 A1
- US 5552451 A1
- DE 102013020538 A1
- WO 2006027387 A1

**In der Beschreibung aufgeführte Nicht-Patentliteratur**

- **T.G. FOX.** *Bull. Am. Phys. Soc.,* 1956, vol. 1, 123
- *CHEMICAL ABSTRACTS,* 2530-83-8
- *CHEMICAL ABSTRACTS,* 2602-34-8
- *CHEMICAL ABSTRACTS,* 65799-47-5
- *CHEMICAL ABSTRACTS,* 2897-60-1
- *CHEMICAL ABSTRACTS,* 86138-01-4
- *CHEMICAL ABSTRACTS,* 3388-04-3
- *CHEMICAL ABSTRACTS,* 10217-34-2
- *CHEMICAL ABSTRACTS,* 220520-33-2
- **F. R. SCHWARZL.** Polymermechanik: Struktur und mechanisches Verhalten von Polymeren. Springer Verlag, 1990, 89 ff
- *CHEMICAL ABSTRACTS,* 3068-78-8
- *CHEMICAL ABSTRACTS,* 26495-91-0
- *CHEMICAL ABSTRACTS,* 13822-56-5
- *CHEMICAL ABSTRACTS,* 919-30-2
- *CHEMICAL ABSTRACTS,* 3179-76-8
- *CHEMICAL ABSTRACTS,* 5089-72-5
- *CHEMICAL ABSTRACTS,* 2530-86-1
- *CHEMICAL ABSTRACTS,* 7538-44-5
- Metall-Keramik-Silikon-Verbundwerkstoffe PALLAS SK-B-012/5 der Fa. ADVANCED SURFACE TECHNOLOGIES. PALLAS OBERFLÄCHENTECHNIK GMBH
- *CHEMICAL ABSTRACTS,* 15520-11-3, 78-67-1, 73597-48-5, 2530-83-8, 2602-34-8, 2897-60-1, 3388-04-3, 220520-33-2, 919-30-2, 3126-63-4, 2855-13-2, 2386-87-0, 57583-54-7